# EUROPEAN PATENT SPECIFICATION

(11) **EP 1 669 938 B1**
(45) Date of publication and mention of the grant of the patent: **09.09.2020**
(21) Application number: 04788368.1
(22) Date of filing: 30.09.2004
(51) Int. Cl.: G05B 23/02, G07C 3/08

(54) **FACILITY DIAGNOSIS METHOD, FACILITY DIAGNOSIS CALCULATION SYSTEM OPERATION METHOD, AND FACILITY DIAGNOSIS CALCULATION SYSTEM**
EINRICHTUNGS-DIAGNOSEVERFAHREN, EINRICHTUNGS-DIAGNOSE-BERECHNUNGSSYSTEM-BETRIEBSVERFAHREN UND EINRICHTUNGS-DIAGNOSE-BERECHNUNGSSYSTEM
PROCEDE DE DIAGNOSTIC D'INSTALLATIONS, PROCEDE DE FONCTIONNEMENT DE SYSTEME DE CALCUL DE DIAGNOSTIC D'INSTALLATIONS ET SYSTEME DE CALCUL DE DIAGNOSTIC D'INSTALLATIONS

(30) Priority: 03.10.2003 JP 2003345772
(43) Date of publication of application: 14.06.2006
(73) Proprietor: TLV Co., Ltd., Kakogawa-shi, Hyogo 675-8511 (JP)
(72) Inventor: Fujiwara, Yoshiyasu, c/o TLV Co., Ltd., Kakogawa-shi, Hyogo 6758511 (JP)
(74) Representative: Lemcke, Brommer & Partner Patentanwälte Partnerschaft mbB
(86) International application number: PCT/JP2004/014340
(87) International publication number: WO 2005/034045

(56) References cited:
- EP-A- 1 203 910
- JP-A- 6 300 186
- JP-A- 2000 035 378
- JP-A- 2002 140 745
- JP-A- 2003 130 289
- JP-A- 2003 131 708
- W.T. Deacon: "The Dangersof Uncontrolled Gases in Steam Systems", , February 1990 (1990-02), Retrieved from the Internet: URL:https://www.armstronginternational.com /sites/default/files/resources/documents/t hedangersofuncontrolledgasesinsteamsystems 2-90.pdf [retrieved on 2017-10-19]

## Description

### TECHNICAL FIELD

The present invention relates to a method of diagnosing a system, a method of operating an aggregating system for system diagnosis and an aggregating system for system diagnosis.

### BACKGROUND ART

Conventionally, there is known a method of diagnosing a system using steam as follows. First, operational conditions of a plurality of steam traps in a client's evaluation target system to be diagnosed are diagnosed by a trap diagnotor. Next, based on the result of this diagnosis, the method calculates a trap-passed steam loss for all the steam traps in the diagnosis evaluation target system (i.e. the aggregated loss of the trap-passed steam losses of all of the steam traps in the evaluation target system). Then, the method presents before the client an economic advantage obtained through reduction in the trap-passed steam loss by replacing all the steam traps by new steam traps (see Patent Document 1).

Patent Document 1: Japanese Patent Application "Kokai" No. 2002-140745 Patent Document 2: EP1203910 describes a method for supporting sales and maintenance of steam traps.

### DISCLOSURE OF THE INVETNION

### PROBLEM TO BE SOLVED BY INVENTION

According to the above-described conventional diagnosing method, while it is possible to grasp the total amount of steam loss which can be solved by trap replacement, it is impossible to grasp to what specific ratio the steam loss in the steam piping in the target system can be reduced by such trap replacement. For this reason, it has been difficult to appropriately evaluate the effectiveness of the trap replacement for the steam loss reduction.

In view of the above-described state of the art, a principal object of the present invention is to provide a method of diagnosing a system, a method of operating an aggregating system for system diagnosis and an aggregating system for system diagnosis, which are suitable for appropriate evaluation of the effectiveness of the trap replacement for the steam loss reduction.

### MEANS TO SOLVE THE PROBLEM

The first characterizing feature of the present application relates to a method of diagnosing a system.

According to the features of the pre-characterizing portion of claim 1.

the features of the characterizing portion of claim 1

That is to say, in a steam piping, in general, there exists steam loss due to various causes. In the system diagnosing method according to this first characterizing feature, the total unknown steam amount which is a difference between the total receiving steam amount and the total necessary steam amount means a total amount of seam loss existing due to various causes in an evaluation target steam piping.

Therefore, if the total amount of steam loss which can be solved by a predetermined system improvement in the evaluation target steam piping (corresponding to the total trap-passed steam loss amount which can be solved by trap replacement in the case of the example described in the background art above) is set as a total improvable steam loss amount and a ratio of this total improvable steam loss amount relative to the total unknown steam amount is set as an improvable unknown steam ratio, then, this improvable unknown steam ratio is indicative of a ratio of reduction in the total unknown steam amount which can be realized after the predetermined system improvement.

Also, if the ratio of the total unknown steam amount relative to the total receiving steam amount is set as an unknown steam ratio (i.e. a present unknown steam ratio) and the ratio of the total basis unknown steam amount (i.e. the total amount of steam loss remaining after the improvement) relative to the value obtained by subtracting the total improvable steam loss amount from the total unknown steam amount (i.e. the new total receiving steam amount after the improvement) is set as an improved unknown steam ratio, the unknown steam ratio and the improved unknown steam ratio indicate the ratio of reduction in the total unknown steam amount realized by the predetermined system improvement in the form of comparison between the two values.

Further, if the ratio of the total basis unknown steam amount (the total amount of steam loss remaining after the improvement) relative to the total receiving steam amount is set as an apparent improved unknown steam ratio, the unknown steam ratio and the apparent improved unknown steam ratio also indicate approximately the ratio of reduction in the total unknown steam amount realized by the predetermined system improvement in the form of comparison between the two values.

From the above, according to the system diagnosing method of the first characterizing feature, if the improvable unknown steam ratio or the unknown steam ratio and the improved unknown steam ratio or the unknown steam ratio and the apparent improved unknown steam ratio are obtained, it is readily possible to grasp what specific ratio of reduction of steam loss is possible for the entire evaluation target steam piping in the steam using system by the predetermined system improvement. Hence, in this respect, there is provided a system diagnosing method more suitable for appropriate evaluation of effectiveness of various kinds of system improvements intended for steam loss reduction.

Incidentally, in the implementation of the system diagnosing method of the first characterizing feature, the predetermined system improvement is not limited to replacement and/or repair of steam traps in the evaluation target steam piping. It can be of any specific contents as long as it allows a certain degree of quantitative grasp of the total amount of steam loss (total improvable steam loss amount) which can be solved by such system improvement.

Moreover, in implementing the system diagnosing method according to the first characterizing feature, in case the flash steam generated from high-pressure steam drain is to be reused in the low-pressure system, it is preferred that the total receiving steam amount be grasped with the amount of the reused flash steam being included in duplication in the amount of seam prior to the draining.

[2] The second characterizing feature of the present invention is specification of a preferred mode of embodiment of the system diagnosing method relating to the first characterizing feature. The feature is characterized in that:
performing a trap operation diagnosis on a plurality of evaluation target steam traps mounted in the evaluation target steam piping;
based on a result of the trap operation diagnosis, calculating a total trap-passed steam loss amount obtained by aggregating trap-passed steam loss amounts for the total number of evaluation target steam traps; and
obtaining, using said total trap-passed steam loss amount as the total improvable steam loss amount to obtain the improvable unknown steam ratio, or the unknown steam ratio and the improved unknown steam ration, or the unknown steam ratio and the apparent improved unknown steam ratio.

That is, according to the system diagnosing method of this second characterizing feature, when it is desired to reduce the steam loss in the evaluation target steam piping by replacement (or repair) of the steam traps, it is possible to appropriately and readily the effectiveness of system improvement by such trap replacement (or repair).

That is to say, in the system diagnosing method according to the second characterizing feature, the total trap-passed steam loss amount calculated based on the result of the trap operation diagnosis means a total amount of steam loss which can be solved by the replacement (or repair) of the evaluation target steam traps mounted in the evaluation target steam piping.

Therefore, if this total trap-passed steam loss amount is used as the total improvable steam loss amount to obtain the improvable steam ratio, or the unknown steam ratio and the improved unknown steam ration, or the unknown steam ratio and the apparent improved unknown steam ratio, the obtained values indicate the ratio of reduction in the total unknown steam amount which can be realized by the replacement (or repair) of the evaluation target stem traps.

From the above, if the improvable steam ratio, or the unknown steam ratio and the improved unknown steam ration, or the unknown steam ratio and the apparent improved unknown steam ratio is/are obtained according to the system diagnosing method of the second characterizing feature, it is readily possible to grasp what specific ratio of reduction of steam loss is possible for the entire evaluation target steam piping in the steam using system by the replacement (or repair) of the traps. Therefore, because of this, it is possible to appropriately and readily evaluate effectiveness of the system improvement by the trap replacement (or repair).

[3] The third characterizing feature of the present invention is specification of a preferred mode of embodiment of the system diagnosing method relating to the first characterizing feature. The feature is characterized in that:
performing a trap operation diagnosis on a plurality of evaluation target steam traps mounted in the evaluation target steam piping and a steam leakage diagnosis for diagnosing steam leakage from respective piping portions of the evaluation target steam piping;
based on a result of the trap operation diagnosis, calculating a total trap-passed steam loss amount obtained by aggregating trap-passed steam loss amounts for the total number of evaluation target steam traps;
based on a result of the steam leakage diagnosis, calculating a total steam leakage loss amount obtained by aggregating steam leakage loss amounts from the respective piping portions;
obtaining, using a sum total steam loss amount, which is a sum of said total trap-passed steam loss amount and said total steam leakage loss amount, as the total improvable steam loss amount to obtain the improvable unknown steam loss ratio, or the unknown steam ratio and the improved unknown steam ratio, or the unknown steam ratio and the apparent improved unknown steam ratio.

That is, according to the system diagnosing method of this third characterizing feature, when it is desired to reduce the steam loss in the evaluation target steam piping by replacement (or repair) of the steam traps and repair of the steam leaking portions in the respective piping portions, it is possible to appropriately and readily the effectiveness of system improvement by such trap replacement (or repair) and the repair of the steam leaking portions.

That is to say, in the system diagnosing method according to the third characterizing feature, the sum total steam loss amount, which is a sum of the total trap-passed steam loss amount calculated based on the result of the trap operation diagnosis and the total steam leakage loss amount calculated based on the result of the steam leakage diagnosis, a total amount of steam loss which can be solved by the two factors, i.e. the replacement (or repair) of the evaluation target steam traps mounted in the evaluation target steam piping and the repair of the steam leaking portions in this piping.

Therefore, if this sum total steam loss amount is used as the total improvable steam loss amount to obtain the improvable steam ratio, or the unknown steam ratio and the improved unknown steam ration, or the unknown steam ratio and the apparent improved unknown steam ratio, the obtained values indicate the ratio of reduction in the total unknown steam amount which can be realized by the two factors, i.e. the replacement (or repair) of the evaluation target stem traps and the repair of the steam leaking portions in this piping..

From the above, if the improvable steam ratio, or the unknown steam ratio and the improved unknown steam ration, or the unknown steam ratio and the apparent improved unknown steam ratio is/are obtained according to the system diagnosing method of the third characterizing feature, it is readily possible to grasp what specific ratio of reduction of steam loss is possible for the entire evaluation target steam piping in the steam using system by the two factors, i.e. the replacement (or repair) of the traps and the repair of the steam leaking portions in this piping. Therefore, because of this, it is possible to appropriately and readily evaluate effectiveness of the system improvement by the two factors, i.e. the trap replacement (or repair) and the repair of the steam leaking portions in this piping.

In implementing the system diagnosing method according to the second or third characterizing feature, the trap-passed steam loss refers to loss of steam undesirably discharged to the outside as a result of its passage through the steam trap due mainly to the operational defect of the steam trap. Preferably, a trap-passed steam loss amount difference due to a type difference between the existing stream trap and a steam trap recommended for its replacement should also be treated as a trap-passed steam loss.

In implementing the system diagnosing method according to the second or third characterizing feature, the calculation of the total trap-passed steam loss amount can employ either one of the two methods as follow. Namely, the trap operation diagnosis can be performed on all the evaluation target seam traps mounted in the evaluation target piping and based on the result of this diagnosis, the total trap-passed steam loss amount may be obtained. Alternatively, the trap operation diagnosis can be performed only one some steam traps selected from the evaluation target steam traps mounted in the evaluation target steam piping and based on the result of this diagnosis and number ratio information relating to the some steam traps and the all the evaluation target stem traps, the total trap-passed steam loss amount may be obtained deductively.

In implementing the system diagnosing method according to the third characterizing feature, the calculation of the total steam leakage loss amount can employ either one of the two methods as follow. Namely, the steam leakage diagnosis can be performed on the entire evaluation target steam piping and based on the result of this diagnosis, the total steam leakage loss amount may be obtained. Alternatively, the steam leakage diagnosis can be performed only one some portions selected from the evaluation target steam piping and based on the result of this diagnosis and evaluation amount ratio information (e.g. information concerning piping amount ratio, mounted valve number ratio, etc.), the steam leakage loss amount may be obtained deductively.

And, in implementing the system diagnosing method relating to the third characterizing feature, preferably, the steam leakage diagnosis for diagnosing leakage of steam from respective portions of an evaluation target steam piping should be performed for each and every steam leakage from a joint or valve incorporated in middle of the piping or steam leakage from the pipe body per se as well as for steam leakage from a device to which the pining is connected. However, in certain cases, the diagnosis can be performed for only one of them (e.g. steam leakage from the pipe).

[4] The fourth characterizing feature of the present invention relates to a method of operating an aggregating system for diagnosing a steam trap system according to the features of the pre-charakterising portion of claim 4, the method characterized by the features of the charakterising portion of claim 4.

That is, according to the system operating method of this fourth characterizing feature, like the system diagnosing method of the second characterizing feature described above, with the improvable unknown steam ratio, or the unknown steam ratio and the improved unknown steam ratio, or the unknown steam ratio and the apparent improvable unknown steam ratio, calculated by the calculating means, it is readily possible to grasp what specific ratio of reduction of steam loss is possible for the entire evaluation target steam piping in the steam using system by the replacement (or repair) of the traps. Therefore, because of this, it is possible to appropriately and readily evaluate effectiveness of the system improvement by the trap replacement (or repair).

Further, according to the system operating method of this fourth characterizing feature, if the calculation of the total trap-passed steam loss amount which is the total improvable steam loss amount which can be improved by the system improvement by trap replacement (or repair) and the calculations of the respective values (the improvable unknown steam ratio, the unknown steam ratio, the improved unknown steam ration and the apparent improved unknown steam ratio) as index values indicative of the effectiveness of the system improvement are automatically effected by the calculating means at the calculating step, it is possible to reduce the burden of calculating operations after the diagnosis. Further, with this automization, after the performance of the trap operation diagnosis, it is also possible to effectively reduce the time period needed until the consideration of the effectiveness of system improvement using the calculation results.

[5] The fifth characterizing feature of the present invention relates to a method of operating an aggregating system for diagnosing a steam trap system according to the features of the pre-charackterising portion of claims 5. the method characterized by the features of the charakterising portions of claims 5.

That is, according to the system operating method of this fifth characterizing feature, like the system diagnosing method of the third characterizing feature described above, with the improvable unknown steam ratio, or the unknown steam ratio and the improved unknown steam ratio, or the unknown steam ratio and the apparent improvable unknown steam ratio, calculated by the calculating means, it is readily possible to grasp what specific ratio of reduction of steam loss is possible for the entire evaluation target steam piping in the steam using system by the two factors, i.e. the replacement (or repair) of the traps and the repair of the steam leaking portions. Therefore, because of this, it is possible to appropriately and readily evaluate effectiveness of the system improvement by the two factors, i.e. the trap replacement (or repair) and the repair of the leaking portions.

Further, according to the system operating method of this fifth characterizing feature, like the system operating method of the fourth characterizing feature, if the calculation of the sum total steam loss amount which is the total improvable steam loss amount which can be improved by the system improvement by trap replacement (or repair) and the repair of the steam leaking portions (i.e. the sum of the total trap-passed steam loss amount and the total steam leakage loss amount) and the calculations of the respective values (the improvable unknown steam ratio, the unknown steam ratio, the improved unknown steam ratio and the apparent improved unknown steam ratio) as index values indicative of the effectiveness of the system improvement are automatically effected by the calculating means at the calculating step, it is possible to reduce the burden of calculating operations after the diagnosis. Further, with this automization, after the performance of the trap operation diagnosis, it is also possible to effectively reduce the time period needed until the consideration of the effectiveness of system improvement using the calculation results.

[6] The sixth characterizing feature of the present invention is specification of a preferred mode of embodiment of the system operating method relating to the fourth or fifth characterizing feature. The feature is characterized by the step of
data generating step performed, based on the calculation results of the calculating means, by a data generating means included in the aggregating system for system diagnosis for generating evaluation data having contents indicative of at least the total unknown steam amount and the improvable unknown steam ratio or evaluation data having contents indicative of at least the total trap-passed steam loss amount, the sum total steam loss amount and the improvable unknown stem ratio or evaluation data having contents indicative of at least the unknown steam ratio and the improved unknown steam ratio or evaluation data having contents indicative of at least the unknown steam ratio and the apparent improved unknown steam ratio.

That is, according to the system operating method of this sixth characterizing feature, evaluation data having contents indicative of at least the total unknown steam amount and the improvable unknown steam ratio or evaluation data having contents indicative of at least the total trap-passed steam loss amount, the sum total steam loss amount and the improvable unknown stem ratio or evaluation data having contents indicative of at least the unknown steam ratio and the improved unknown steam ratio or evaluation data having contents indicative of at least the unknown steam ratio and the apparent improved unknown steam ratio is generated by the data generating means. With this, based on the generated evaluation data, it is possible to appropriately and readily evaluate effectiveness of the system improvement by the two factors of the trap replacement (or repair) and the repair of the steam leaking portions.

More particularly, in the case of the evaluation data having contents indicative of at least the total unknown steam amount and the improvable unknown steam ratio, there are indicated the total unknown steam amount which is the total amount of steam loss in the evaluation target steam piping and the improvable unknown steam ratio which indicates what specific ratio of reduction is possible in the steam loss in the evaluation target steam piping. Hence, it is possible to evaluate, in terms of both the amount and the ratio, the effectiveness of the system improvement. Therefore, in this respect, it becomes possible to evaluate more appropriately and easily the effectiveness on the steam loss reduction by the system improvement through the trap replacement (or repair) or by the system improvement through the two factors, i.e. the trap replacement (or repair) and the repair of leaking portions.

Further, in the case of the evaluation data having contents indicative of at least the total trap-passed steam loss amount, the sum total steam loss amount and the improvable unknown steam ratio, there are indicated the total trap-passed steam loss amount and the sum total steam loss amount as the total improvable steam loss amount as well as the improvable unknown steam ratio which indicates what specific ratio of reduction is possible in the steam loss in the evaluation target steam piping. Hence, it is possible to evaluate, in terms of both the amount and the ratio, the effectiveness of the system improvement. Therefore, in this respect, it becomes possible to evaluate more appropriately and easily the effectiveness on the steam loss reduction by the system improvement through the trap replacement (or repair) or by the system improvement through the two factors, i.e. the trap replacement (or repair) and the repair of leaking portions.

Further, in the case of the evaluation data having contents indicative of at least the unknown steam ratio and the improved unknown steam ratio, in evaluating the effectiveness of system improvement through comparison between the two values, the comparison between the two values can be easily effected. In this respect, it becomes possible to evaluate more appropriately and easily the effectiveness on the steam loss reduction by the system improvement through the trap replacement (or repair) or by the system improvement through the two factors, i.e. the trap replacement (or repair) and the repair of leaking portions.

Further, in the case of the evaluation data having contents indicative of at least the unknown steam ratio and the apparent improved unknown steam ratio, in evaluating the effectiveness of system improvement through comparison between the two values, the comparison between the two values can be easily effected. In this respect, it becomes possible to evaluate more appropriately and easily the effectiveness on the steam loss reduction by the system improvement through the trap replacement (or repair) or by the system improvement through the two factors, i.e. the trap replacement (or repair) and the repair of leaking portions.

And, in the system operating method of the sixth characterizing feature, by effecting the calculations of the respective values at the calculating step automatically by the calculating means and effecting the generation of the evaluation data at the data generating step also automatically by the data generating means, the burdens of calculating and data generating operations after the diagnoses can be further alleviated. And, with these automization, the time period after the performance of the diagnoses until the consideration of the effectiveness of system improvement using the evaluation data can be reduced more effectively.

[7] The seventh characterizing feature of the present invention relates to an aggregating system for system diagnosis, for diagnosing a steam trap sytem according to the features of the pre-charakterising portion of claim 7, charakterized by the features of the charakterising portion of claims 7.

That is, according to the aggregating system of this seventh feature, like the system operating method of the fourth characterizing feature described above, with the improvable unknown steam ratio, or the unknown steam ratio and the improved unknown steam ratio, or the unknown steam ratio and the apparent improvable unknown steam ratio, calculated by the calculating means, it is readily possible to grasp what specific ratio of reduction of steam loss is possible for the entire evaluation target steam piping in the steam using system by the replacement (or repair) of the traps. Therefore, because of this, it is possible to appropriately and readily evaluate effectiveness of the system improvement by the trap replacement (or repair).

Further, according to the aggregating system of this seventh characterizing feature, if the calculations of the various values are automatically effected by the calculating means, it is possible to reduce the burden of calculating operations after the diagnosis. Further, regarding the input of the diagnosis too, the diagnosis result can be easily inputted to the inputting means through input from the trap diagnotor, so that the trouble of the inputting operation can also be alleviated. Moreover, trough these automization of calculations and improved efficiency of input, after the performance of the trap operation diagnosis, it is also possible to effectively reduce the time period needed after the performance of the trap operation diagnosis until the consideration of the effectiveness of system improvement using the calculation results.

[8] The eighth characterizing feature of the present invention relates to an aggregating system for steam trap system diagnosis, according to the features of the pre-charakterising portion of claim 8, charakterized by features of the charakterising portion of claim 8.

That is, according to the aggregating system of this eighth characterizing feature, like the system operating method of the fifth characterizing feature described above, with the improvable unknown steam ratio, or the unknown steam ratio and the improved unknown steam ratio, or the unknown steam ratio and the apparent improvable unknown steam ratio, calculated by the calculating means, it is readily possible to grasp what specific ratio of reduction of steam loss is possible for the entire evaluation target steam piping in the steam using system by the two factors, i.e. the replacement (or repair) of the traps and the repair of the steam leaking portions. Therefore, because of this, it is possible to appropriately and readily evaluate effectiveness of the system improvement by the two factors, i.e. the trap replacement (or repair) and the repair of the leaking portions.

Further, according to the aggregating system of this eighth characterizing feature, like the aggregating system of the seventh characterizing feature, if the calculations of the various values are automatically effected by the calculating means, it is possible to reduce the burden of calculating operations after the diagnosis. Further, regarding the inputs of the respective diagnoses too, the diagnosis results can be easily inputted to the inputting means through inputs respectively from the trap diagnotor and the leakage diagnotor, so that the trouble of the inputting operation can also be alleviated. Moreover, trough these automization of calculations and improved efficiency of inputs, after the performance of the trap operation diagnosis, it is also possible to effectively reduce the time period needed until the consideration of the effectiveness of system improvement using the calculation results.

[9] The ninth characterizing feature of the present invention is specification of a preferred mode of embodiment of the aggregating system for system diagnosis relating to the seventh or eighth characterizing feature. The feature is characterized by:
data generating means for generating, based on the calculation results of the calculating means, evaluation data having contents indicative of at least the total unknown steam amount and the improvable unknown steam ratio or evaluation data having contents indicative of at least the total trap-passed steam loss amount, the sum total steam loss amount and the improvable unknown steam ratio or evaluation data having contents indicative of at least the unknown steam ratio and the improved unknown steam ratio or evaluation data having contents indicative of at least the unknown steam ratio and the apparent improved unknown steam ratio.

That is, according to the aggregating system of this ninth characterizing feature, like the system operating method of the sixth characterizing feature, evaluation data having contents indicative of at least the total unknown steam amount and the improvable unknown steam ratio or evaluation data having contents indicative of at least the total trap-passed steam loss amount, the sum total steam loss amount and the improvable unknown steam ratio or evaluation data having contents indicative of at least the unknown steam ratio and the improved unknown steam ratio or evaluation data having contents indicative of at least the unknown steam ratio and the apparent improved unknown steam ratio is generated by the data generating means. With this, based on the generated evaluation data, it is possible to appropriately and readily evaluate effectiveness of the system improvement by the two factors, i.e. the trap replacement (or repair) and the repair of the steam leaking portions.

More particularly, in the case of the evaluation data having contents indicative of at least the total unknown steam amount and the improvable unknown steam ratio, there are indicated the total unknown steam amount which is the total amount of steam loss in the evaluation target steam piping and the improvable unknown steam ratio which indicates what specific ratio of reduction is possible in the steam loss in the evaluation target steam piping. Hence, it is possible to evaluate. in terms of both the amount and the ratio, the effectiveness of the system improvement. Therefore, in this respect, it becomes possible to evaluate more appropriately and easily the effectiveness on the steam loss reduction by the system improvement through trap replacement (or repair) or by the system improvement through trap replacement (or repair) and the repair of leaking portions.

Further, in the case of the evaluation data having contents indicative of at least the total trap-passed steam loss amount, the sum total steam loss amount and the improvable unknown steam ratio, there are indicated the total trap-passed steam loss amount and the sum total steam loss amount as the total improvable steam loss amount as well as the improvable unknown steam ratio which indicates what specific ratio of reduction is possible in the steam loss in the evaluation target steam piping. Hence, it is possible to evaluate. in terms of both the amount and the ratio, the effectiveness of the system improvement. Therefore, in this respect, it becomes possible to evaluate more appropriately and easily the effectiveness on the steam loss reduction by the system improvement through the trap replacement (or repair) or by the system improvement through the two factors of the trap replacement (or repair) and the repair of leaking portions.

Further, in the case of the evaluation data having contents indicative of at least the unknown steam ratio and the improved unknown steam ratio, in evaluating the effectiveness of system improvement through comparison between the two values, the comparison between the two values can be easily effected. In this respect, it becomes possible to evaluate more appropriately and easily the effectiveness on the steam loss reduction by the system improvement through trap replacement (or repair) or by the system improvement through the two factors of the trap replacement (or repair) and the repair of leaking portions.

Further, in the case of the evaluation data having contents indicative of at least the unknown steam ratio and the apparent improved unknown steam ratio, in evaluating the effectiveness of system improvement through comparison between the two values, the comparison between the two values can be easily effected. In this respect, it becomes possible to evaluate more appropriately and easily the effectiveness on the steam loss reduction by the system improvement through trap replacement (or repair) or by the system improvement through the two factors of the trap replacement (or repair) and the repair of leaking portions.

Further, if the generation of the evaluation data is effected automatically by the data generating means in addition to effecting the calculations of the various values automatically by the calculating means, it is possible to reduce the burdens of calculating operations and the data generating operation after the diagnosis. Further, with these automization, it is also possible to effectively reduce the time period needed until the consideration of the effectiveness of system improvement using the evaluation data.

Incidentally, in implementing the system operating method according to the fourth or fifth characterizing feature and implementing the aggregating system according to the seventh or eighth characterizing feature, in case the flash steam generated from high-pressure steam drain is to be reused in the low-pressure system, like the system diagnosing method according to one of the first through third characterizing features, it is preferred that the total receiving steam amount be grasped with the amount of the reused flash steam being included in duplication in the amount of seam prior to the draining.

Also, in implementing the system operating method according to the fourth or fifth characterizing feature and implementing the aggregating system according to the seventh or eighth characterizing feature, also like the system diagnosing method according to one of the first through third characterizing features, the trap-passed steam loss refers to loss of steam undesirably discharged to the outside as a result of its passage through the steam trap due mainly to the operational defect of the steam trap. Preferably, a trap-passed steam loss amount difference due to a type difference between the existing stream trap and a steam trap recommended for its replacement should also be treated as a trap-passed steam loss.

In implementing the system operating method according to the fourth or fifth characterizing feature and implementing the aggregating system according to the seventh or eighth characterizing feature, the calculation of the total trap-passed steam loss amount can employ either one of the two methods as follow. Namely, the trap operation diagnosis can be performed on all the evaluation target seam traps mounted in the evaluation target piping and based on the result of this diagnosis, the total trap-passed steam loss amount may be obtained. Alternatively, the trap operation diagnosis can be performed only one some steam traps selected from the evaluation target steam traps mounted in the evaluation target steam piping and based on the result of this diagnosis and number ratio information relating to the some steam traps and the all the evaluation target stem traps, the total trap-passed steam loss amount may be obtained deductively.

Also, in implementing the system operating method according to the fifth characterizing feature and implementing the aggregating system according to the eighth characterizing feature, the calculation of the total steam leakage loss amount can employ either one of the two methods as follow. Namely, the trap operation diagnosis can be performed on the entire evaluation target steam piping and based on the result of this diagnosis, the total steam leakage loss amount may be obtained. Alternatively, the trap operation diagnosis can be performed only one some portions selected from the evaluation target steam piping and based on the result of this diagnosis and evaluation amount ratio information (e.g. information concerning piping amount ratio, mounted valve number ratio, etc.), the steam leakage loss amount may be obtained deductively.

And, in implementing the system operating method according to the fifth characterizing feature and implementing the aggregating system according to the eighth characterizing feature, preferably, the steam leakage diagnosis for diagnosing leakage of steam from respective portions of an evaluation target steam piping should be performed for each and every steam leakage from a joint or valve incorporated in middle of the piping or steam leakage from the pipe body per se as well as for steam leakage from a device to which the pining is connected. However, in certain cases, the diagnosis can be performed for only one of them (e.g. steam leakage from the pipe).

Further, in implementing the system operating method according to the sixth characterizing feature and implementing the aggregating system according to the ninth characterizing feature, the generation of the evaluation data by the data generating means is not limited to generation of data showing its contents as being printed on a paper sheet, but can be generation of data showing its contents on a display device . Also, for showing the calculated values by the calculating means or the diagnosis results, the evaluation data can employ not only numerals or characters, but also graphs, figures, etc.

### BEST MODE OF EMBODYING THE INVENTION

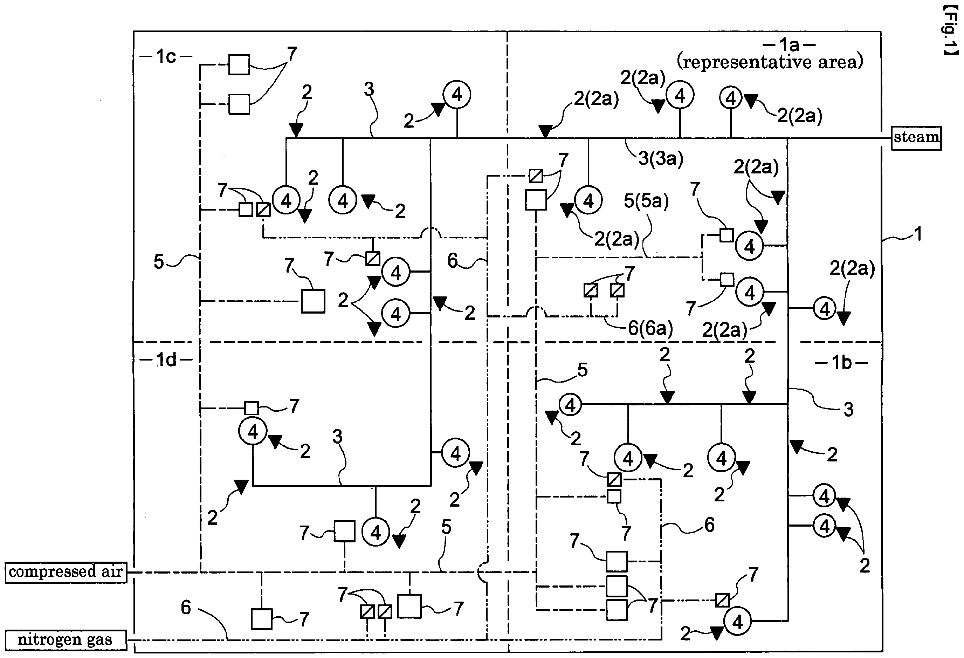

In Fig. 1, numeral 1 denotes a large-scale system such as a chemical plant, using many steam traps 2. Numeral 3 denotes a steam piping (shown with solid line) installed in the system. Numeral 4 denotes a steam-using apparatus to which the steam piping 3 is connected. At respective positions of this steam piping 3, there are mounted the steam traps 2 in connection with the piping and the steam-using apparatus 4. Further, this system 1 uses compressed air and nitrogen gas, in addition to steam. Hence, numeral 5 denotes a compressed air piping (denoted with dot line), numeral 6 denotes a nitrogen gas piping (denoted with two-dotted line), and numeral 7 denotes a piping-connected apparatus to which the compressed air pining 5 and the nitrogen gas piping 6 are to be connected, respectively. Each of the piping 3, 5, 6 incorporates a number of joints for pipe connections/branching and a number of valves for opening/closing or switching over the pipes.

For the purpose of comprehensive improvement of the above-described system 1, an attendant person of a maker who makes/sells the system components and also installs/maintains the system offers to the client of the system to conduct a preliminary system diagnosis limited to one day of diagnosis and discusses with the client about contents, the date, etc. of the diagnosis and which of areas 1a-1d in the system 1 should be selected as diagnosis target areas. Then, on the date of diagnosis decided in the discussion, the maker person in charge sends a required number of diagnosing persons to the target system 1 and effect a plurality of diagnosis, in a batch, i.e. at one time, on that date of diagnosis.

Incidentally, in this embodiment, it is assumed that as the result of the discussion with the client, four kinds of diagnosis are to be effected, namely, a trap operation diagnosis for diagnosing operational conditions of a plurality of steam traps in the target system 1, a fluid leakage diagnosis for diagnosing fluid leakage, if any, from respective portions of the piping, of the evaluation target piping in the target system 1, a system improvement diagnosis for diagnosing need or no need of system improvement in any system construction of the target system 1, and a maintenance improvement diagnosis for diagnosing need or no need of improvement in a maintenance method currently adopted by the target system 1. It is also assumed that in the trap operation diagnosis, all stream traps 2 in the target system 1 are set as evaluation target steam traps and in the fluid leakage diagnosis the steam piping 3, the compressed air piping 5 and the nitrogen gas piping 6 are set respectively as evaluation target piping.

Further, in this embodiment, in effecting the fluid leakage diagnosis, it is assumed that regarding the steam piping 3 having a greater number of pipes in particular, a simplified diagnosis (simplified steam leakage diagnosis) for diagnosing steam leak from bypass pipes incorporated in bypass circuit for the steam traps 2 is to be effected. And, it is also assumed that for the compressed air piping 5 and the nitrogen gas piping 6, leaks, if any, from the joints or valves or the pipes per se, and from the piping-connected apparatus 7 are to be diagnosed, respectively.

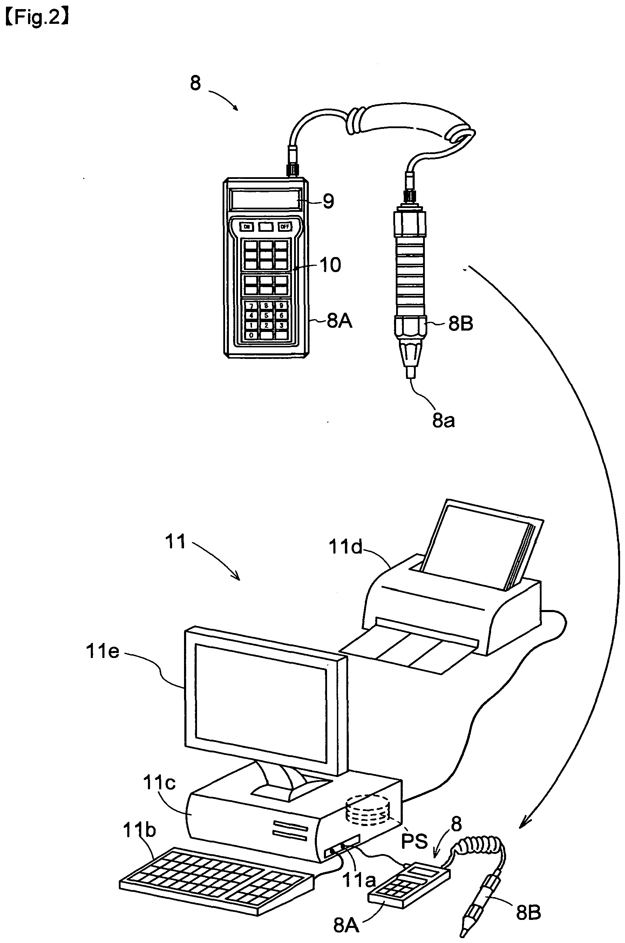

Fig. 2 shows a portable trap diagnotor 8 for use in the trap operation diagnosis. Mark 8A denotes a diagnotor body, mark 8B denotes a detector to be cable-connected to the diagnotor body 8A. The diagnotor body 8A includes a display section 9 for displaying inputted contents, diagnosis results, etc and various kinds of keys 10.

For diagnosing operational conditions of the steam traps 2 using this trap diagnotor 8, the diagnosing attendant confirms, the type, diameter and the date of diagnosis for each steam trap 2 and input these confirmed data, together with an installed location, a serial number and date of diagnosis of the trap, to the trap diagnotor 8 by operating the keys 10. Then, by placing a detecting end 8a of the detector 8B in contact with each predetermined portion of the steam trap 2, a surface temperature and vibration (vibration intensity in ultrasonic range) of the steam trap 2 are detected.

With the above-described detection operation, a calculating section incorporated in the diagnotor body 8A calculates a used steam pressure of the steam trap 2 based on the detected value of the surface temperature and calculates a trap-passed steam loss amount qt (in this embodiment, mass flow amount per unit time) due to a malfunctioning of the steam trap 2, by correlating the calculated used steam pressure and the detected value of vibration with a steam loss amount (so-called, steam leakage amount of steam trap) due to vibration and trap passage related to a pre-inputted steam pressure. And, in this calculation, it is judged whether the operation of the steam trap 2 is good or poor. And, the result of this calculation/judgment is stored in a storage section of the diagnotor body 8A, together with respective inputs of the serial number, the model, the diameter, the usage of the steam trap.

However, in case some or all of the input items such as the confirmed data, date of diagnosis have been downloaded in advance from e.g. a client's side managing computer-system or a maker's side diagnosing computer system to the diagnotor 8, it is not needed to input these data again and at the time of the operation diagnosis of each stream tap 2, only confirmation of these pre-inputted items is needed.

After a series of condition diagnoses of the plurality of steam traps 2, the calculation/detection results, detected values and the input items including confirmed items of the mode, usage or the like for the respective steam traps 2 which are all stored in the storage section of the diagnotor body 8A, will be inputted, as result of the trap operation diagnosis, to the diagnosing computer system 11, by connecting the diagnotor 8 to the diagnosing computer system 11 (via wired or wireless connection) as shown in Fig. 2.

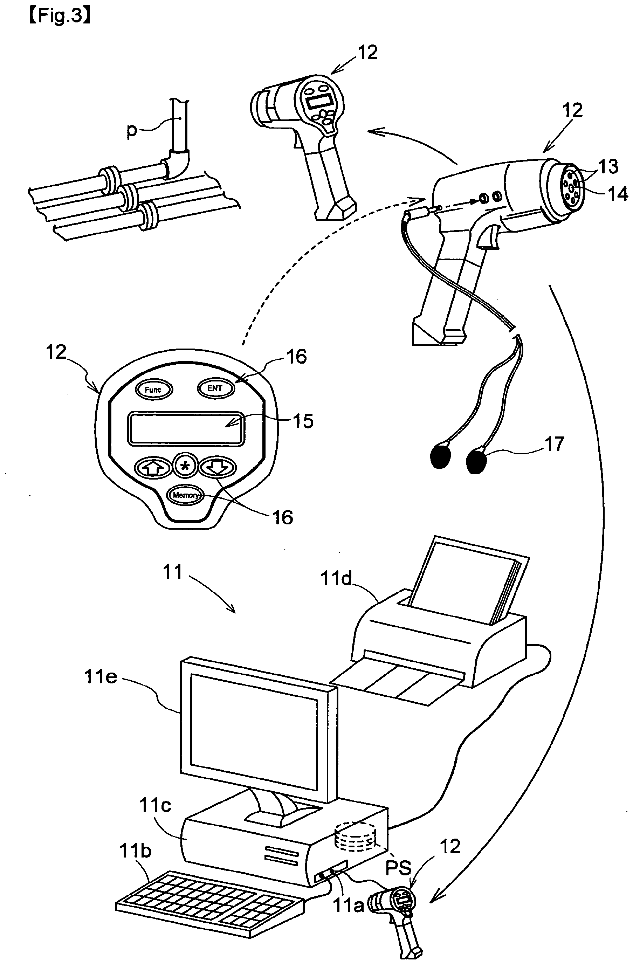

Fig. 3 shows a portable leakage diagnotor 12 for use in the fluid leakage diagnosis. At a leading end of the gun-shaped diagnotor 12, there are disposed a microphone 13 and an optical beam source 14 for detecting generated ultrasonic wave at a fluid leaking point. At a rear end of the diagnotor 12, there are provided a display section 15 for displaying inputted contents, diagnosis results, etc. and various keys 16. This diagnotor 12 further includes an earphone 17 for outputting a detection sound which is an audible sound converted from the detected ultrasonic wave from the microphone 13.

For diagnosing fluid leakage from the respective piping portions (e.g. piping, joints, valves, piping-connected apparatuses) using this leakage diagnotor 12, as shown in Fig. 3, the diagnosing attendant will orient the leading end of the diagnotor 12 toward a detection target portion and while visually confirming an irradiated point p of the optical beam from the optical beam source 14, the attendant will gradually change the orientation of the leading end of the diagnotor 12. And, for each orientation displayed in the display section 15, a leaking point, if any, is detected, based on a detection value (sound pressure) of ultrasonic wave and a detection sound outputted from the earphone 17 for each orientation.

And, if a leaking point is discovered by this detection operation, by an operation of the key 16, storage of information regarding this leaking point is instructed to the calculating section of the diagnotor 12 and for respective items of distance, type, direction and fluid, calculating conditions for fluid leakage amount for that leaking point are inputted by operations of the keys 16.

In the above-described items of the calculation conditions, the distance mans a distance between the leaking point and the diagnotor 12, the type means a type of the leaking point such as a pipe, a valve, a joint, etc. and the direction means detection direction of the ultrasonic wave for the leaking point and the fluid means type of leaking fluid, respectively.

Upon input of the above items of the calculation conditions, then, based on these calculation conditions and the ultrasonic wave detection value, the calculating section of the diagnotor 12 calculates a fluid loss amount q due to the leakage at the leaking point (in this case, the weight flow amount per unit time for the seam loss amount qs and a volume flow amount per unit time for the loss amounts qp, qn for the compressed air and the nitrogen gas, respectively). And, these calculation results are stored in the storage section of the diagnotor 1, together with the ultrasonic wave detection value, the calculation conditions, as well as e.g. the position information, diagnosis date inputted separately to the diagnotor 12.

Like the above-described case of the trap condition diagnosis, after a series of leakage diagnoses for respective piping portions, by connecting the diagnotor 12 shown in Fig. 3 to the diagnosing computer system 11 (via wired or wireless connection), the calculation results, the detected values, the calculation conditions etc stored in the storage section of the diagnotor 12 for each leaking point, are inputted as a result of fluid leakage diagnosis, to the diagnosing computer system 11.

Incidentally, in the case of a method adopted in this embodiment, while all the stream traps 2 included in the target system 1 are set as the evaluation target steam traps, in the trap operation diagnosis, the operation diagnosis by the trap diagnotor 8 is conducted only on some stream traps (specifically, steam traps 2a included in a representative area 1a decided through the discussion with the client) of the evaluation target steam traps. Then, based on the result of this diagnosis, the operational conditions of all the evaluation target steam traps (in this case, all of the steam traps 2 of the target system 1) will be evaluated by way of deduction.

Also, while all of the steam piping 3, the compressed air piping 5 and the nitrogen gas piping 6 in the target system 1 are set as the evaluation target piping, in the fluid leakage diagnosis, the leakage diagnosis by the leakage diagnotor 12 is conducted only on some piping portions (specifically, piping portions 3a, 5a, 6a included in the representative area 1a decided through the discussion with the client) of the respective evaluation target piping 3, 5, 6. Then, based on the result of this diagnosis, the fluid leakage condition of each entire evaluation target piping 3, 5, 6 (in this case, each of entirety of the steam piping 3, the compressed air piping 5 and the nitrogen gas piping 6) will be evaluated by way of deduction.

On the other hand, for the system improvement diagnosis, with reference to a data source document relating to the system construction provided from the client), the diagnosing attendant inspects each system construction in the target system 1 on the day of diagnosis and diagnoses any inappropriateness in the existing system in view of obsolescence of the existing system construction and the current operational conditions thereof. Regarding the maintenance improvement diagnosis also, with reference to a data source document relating to the presently adopted maintenance method provided from the client, the diagnosing attendant will inspect the target system 1 in the respect of its maintenance aspect and diagnose any inappropriateness in the present maintenance system in view of obsolescence of the existing system construction and the current operational conditions.

Incidentally, though may vary depending on the system, some examples of the system construction subjected to the system improvement diagnosis include a stream depressurizing construction for rendering high-pressure steam into low-pressure steam, a processing construction such as stream drain or exhaust steam processing construction, water draining construction for an oil tank. Some examples of the maintenance operations are an inspection of corrosion in the piping or legs of a tank, axis alignment for a rotary device such as a steam turbine.

Upon completion of the operation diagnosis by the trap diagnotor 8 on the steam traps 2a ("representative steam traps" hereinafter) included in the representative area 1a of the target system 1, as described hereinbefore, the stored information (e.g. the calculation/judgment result, detection value, input items including type, usage, etc. including the confirmed items) relating to each representative steam trap 2a and stored in the storage section of the trap diagnotor 8 are inputted to the diagnosing computer system 11. Also, upon completion of the leakage diagnosis using the leakage diagnotor 12 on the piping portions 3a, 5a, 6a ("representative piping portions" hereinafter) of the stream piping 3, the compressed air piping 5 and the nitrogen gas piping 6 included in the target system 1, the stored information (e.g. the calculation/judgment result, detection value, calculation conditions) relating to each leaking point and stored in the storage section of the leakage diagnotor 12 are inputted to the diagnosing computer system 11. In addition to the inputs from these diagnotors 8, 12, based on the data source documents provided from the client, the total number T of steam traps in the target system 1 (that is, the number of all the evaluation target steam traps in this embodiment), the number of bypass valves V included in the entire steam piping 3 of the target system 1, the number of the bypass valves Va included in the representative piping portion 3a, entire piping amounts X, Y in the target system 1 for each of the compressed air piping 5 and the nitrogen gas piping 6, and piping amounts Xa, Ya of the representative piping portions 5a, 6a are also inputted to the diagnosing computer system 11 by way of e.g. keyboard operations.

Further, also based on the data source documents provided from the client, a total receiving steam amount Qi and a total necessary steam amount Qo for the entire target system 1 are also inputted to the diagnosing computer system 11 by way of e.g. keyboard operations.

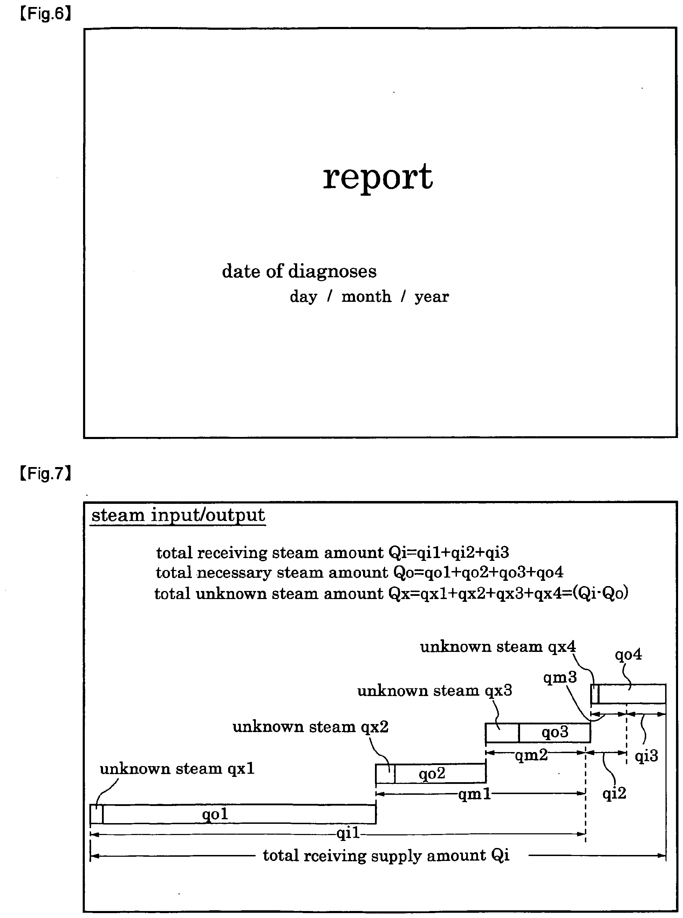

The total receiving steam amount Qi (see Fig. 7) is a sum of a an amount qi1 of steam supplied to the target system 1 produced by a boiler or by using exhaust heat in the target system 1 or via a piping from a separate system and amounts of steam qi2, qi3 to be reused in a low-pressure line from flash steam generated from high-pressure steam drains. The total necessary steam amount Qo is a sum of theoretical used amounts qo1-qo4 of the steam-using apparatuses 4. Namely, a value Qx (= Qi - Qo) obtained by subtracting the total necessary steam amount Qo from the total receiving steam amount Qi means a total amount of steam qx1 through qx 4 (unknown steam amount) lost in some manner in the target system 1. Incidentally, qm1 through qm3 respectively indicate the amounts of steam supplied to the low-pressure line.

On the other hand, in the system improvement diagnosis, the attendant first inspects each system construction of the target system 1. Then, based on the result of this inspection and the data source documents provided from the client, any system construction in the existing system and needing some improvement will be extracted. Thereafter, the attendant will summarize system improvement proposal, an economic advantage obtained by implementing the system improvement proposal, costs of implementing the system improvement proposal and input these system improvement proposal, economic advantage, implement cost, as result of system improvement diagnosis in the form of a predetermined document to the diagnosing computer system 11 by way of e.g. keyboard operations.

Further, similarly, in the maintenance improvement diagnosis, the attendant first inspects the system 1 in the respect of its maintenance. Then, based on the result of this inspection and the data source document provided from the client, any existing maintenance method needing some improvement will be extracted. Thereafter, the attendant will summary method improvement proposal, its economic advantage and implement cost and input these, i.e. the method improvement proposal, the economic advantage and the implement cost, as a result of maintenance improvement diagnosis, in the form of a predetermined document to the diagnosing computer system 11 by way of e.g. keyboard operations.

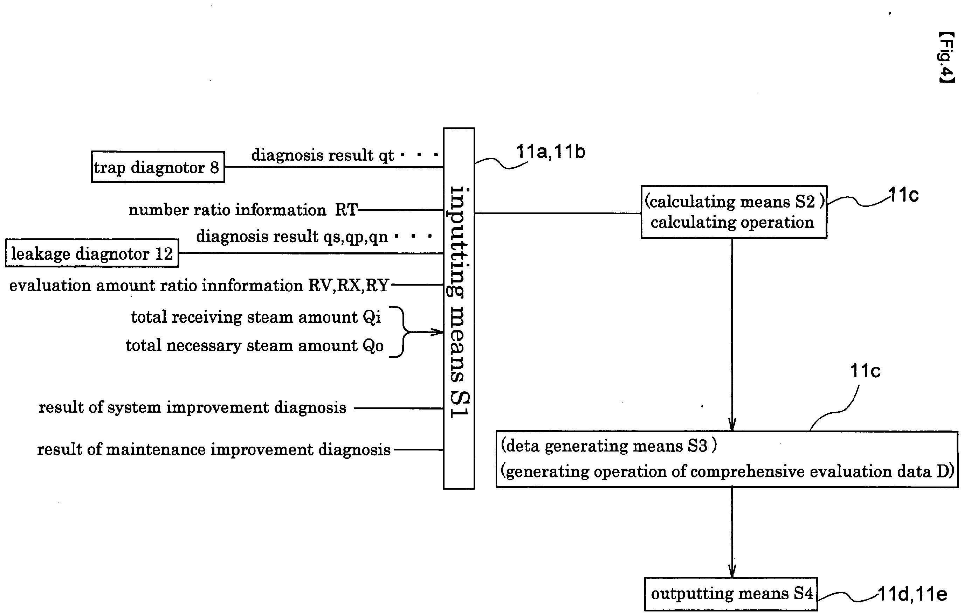

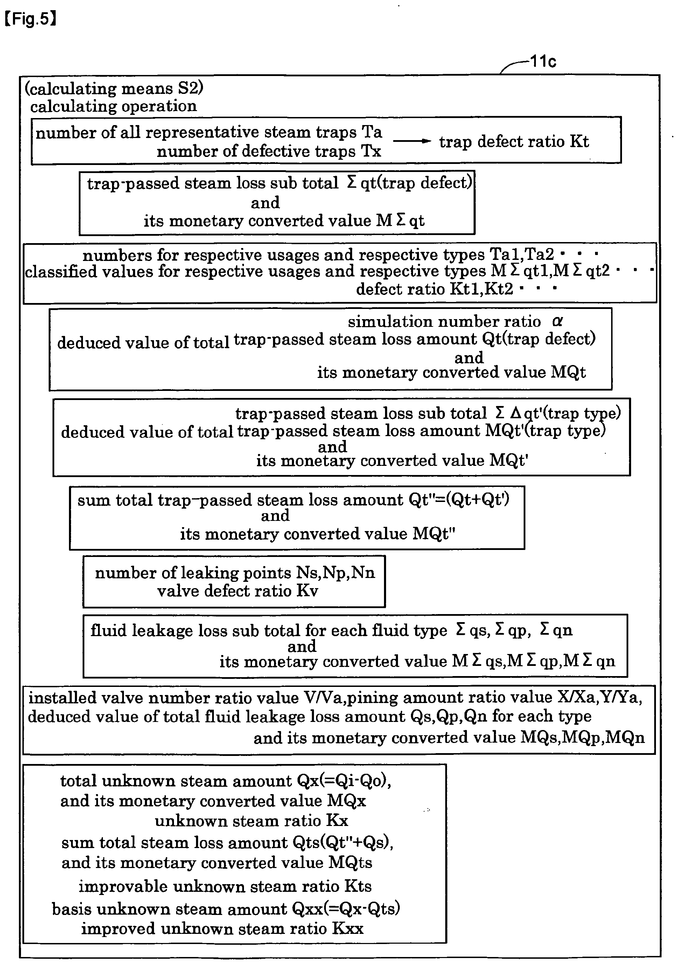

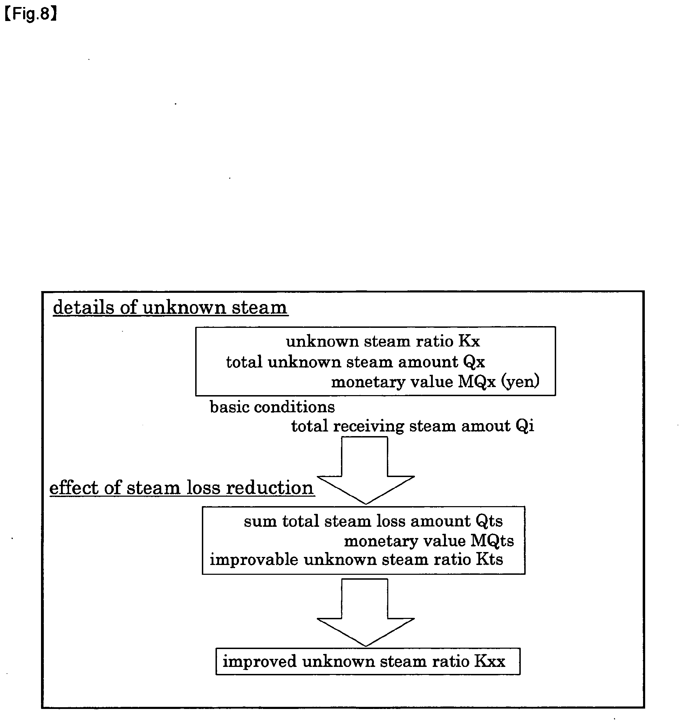

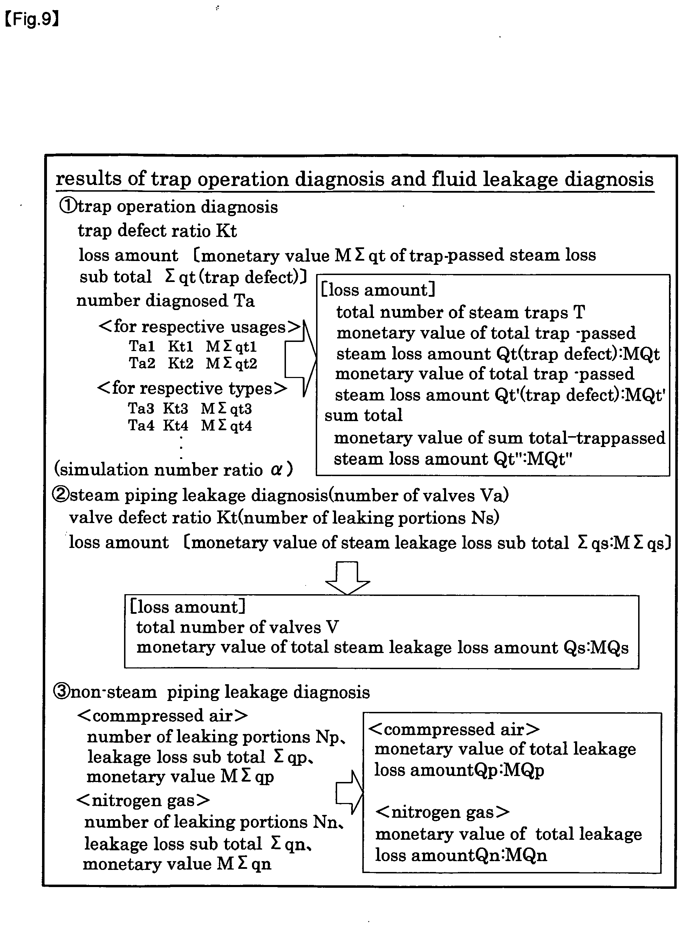

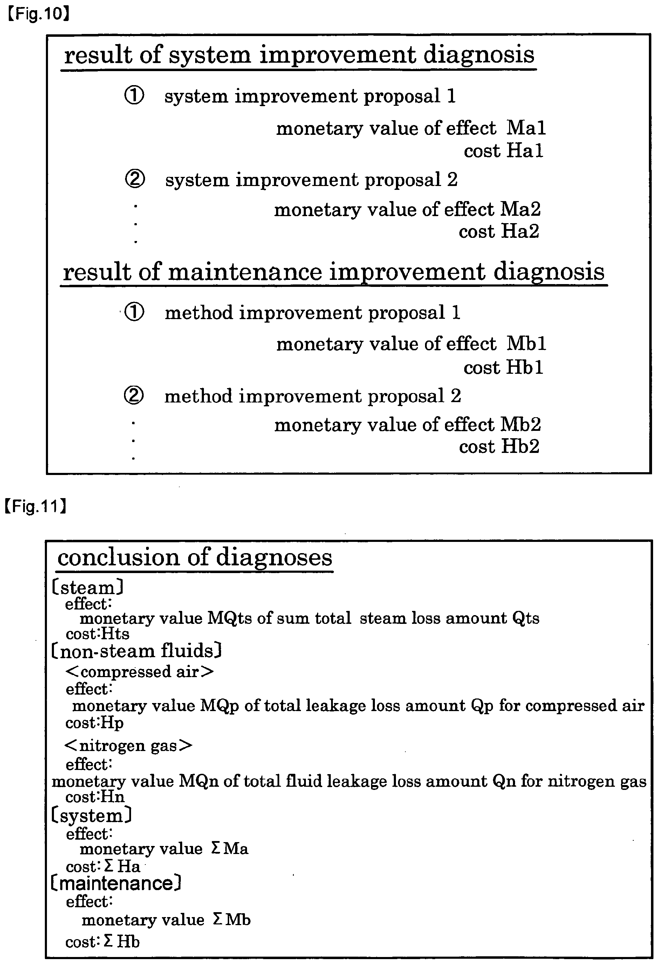

For each of the above-described inputs (step of receiving) after the diagnosis, the diagnosing computer system 11 automatically executes following calculations (a) through (j) according to an aggregating program PS in response to an instruction from the maker attendant (step of calculating, see Fig. 4 and Fig. 5).
(a) Based on the calculation/judgment result for each representative steam trap 2a in the diagnosis result inputted from the trap diagnotor 8, there are obtained a total number of representative steam traps Ta on which the operation diagnosis has been conducted and a number of defective traps Tx included in the representative steam traps 2a. Based on this, there is obtained a ratio of the defective traps relative to the representative steam traps 2a as a trap defect ratio Kt.
(b) Based on the calculation/judgment result for each representative steam trap 2a in the diagnosis result inputted from the trap diagnotor 8, there is calculated a sub total value ∑qt obtained by aggregating trap-passed steam loss amounts qt due to trap defects for all the representative steam traps 2a (that is, a trap-passed steam loss sub total due to the trap defect for all the representative steam traps 2a). Also, by multiplying this sub total value ∑qt with a unit price of steam pre-inputted, there is obtained a monetary converted value M∑qt of the trap-passed steam loss sub total ∑qt due to trap defect. Incidentally, in the instant case, for each monetary converted value, a monetary converted value for one year will be calculated.
(c) Based on the calculation/judgment result for each representative steam trap 2a in the diagnosis result inputted from the trap diagnotor 8 and the model and usage of each representative steam trap 2a, there are calculated numbers Ta1, Ta2....for respective models of the representative steam traps 2a and also trap defect ratios Kt1, Kt2....for each usage and each model. Further, for the monetary converted value M∑qt of the trap-passed steam loss sub total ∑qt, there are obtained classified values M∑qt1, M∑qt2....for each usage and each model.
(d) Based on the total steam trap number T of the target system 1 separated inputted by e.g. a keyboard operation, a ratio of the representative steam traps 2a relative to all steam traps 2 in the target system 1 is calculated as a simulation number ratio α Then, by multiplying a reciprocal of this simulation number ratio α with the trap-passed steam loss sub total ∑qt, there are obtained a deduced value of the total trap-passed steam loss amount Qt (i.e. the value obtained by aggregating the trap-passed steam loss amounts qt due to the trap defect for all the steam traps 2 of the steam piping 3 in the target system 1) and its monetary converted value MQt as well.
   That is to say, based on the diagnosis result inputted from the trap diagnotor 8 and relating to the representative steam traps 2a and also the total steam trap number T separately inputted as a trap number ratio information RT, there are deductively calculated the total trap-passed steam loss amount Qt due to trap defect and its monetary converted value MQt for all the steam traps 2 (i.e. all of the evaluation target steam traps in this case) of the target system 1.
(e) Based on the model information of each representative steam trap 2a in the diagnosis result inputted from the trap diagnotor 8 and the pre-inputted trap model information, there is calculated a difference Δqt' of trap-passed steam amounts under normal trap operational conditions between the existing representative steam trap 2a and a steam trap recommended for its replacement. Further, a sub total value ∑Δqt' obtained by aggregating such differences Δqt' for all the representative steam traps 2a is calculated (that is, a trap-passed steam loss sub total relating to trap model). Also, by multiplying this sub total amount ∑Δqt' by the reciprocal of the simulation number ratio α, a total trap-passed steam loss amount Qt' relating to trap model for all the steam traps 2 of the target system 1 is calculated (i.e. a value obtained by aggregating the trap-model relating differences Δqt' for all the steam traps 2 of the target system 1). And, its monetary converted value MQt' is also calculated.
   That is to say, based on the diagnosis result inputted from the trap diagnotor 8 and relating to the representative steam traps 2a and also the total steam trap number T separately inputted as the trap number ratio information RT, there are deductively calculated the total trap-passed steam loss amount Qt' relating to the trap model and its monetary converted value MQt' for all the steam traps 2 (i.e. all of the evaluation target steam traps in this case) of the target system 1.
(f) There are calculated a sum total trap-passed steam loss amount Qt" by adding the total trap-defect relating trap-passed steam loss amount Qt and the total trap-model relating trap-passed steam loss amount Qt' as well as its monetary converted value MQt".
(g) Based on the calculation conditions (especially, the fluid item) for each leaking point of the diagnosis result inputted from the leakage diagnotor 12, there are obtained leaking portion number Ns, Np, Nn for each of the representative piping portion 3a, 5a, 6a of the respective piping 3, 5, 6 (that is, the number of leaking portions for each type of fluid of the steam, compressed air and the nitrogen gas). Further, based on the leaking portion number Ns relating to seam (in this case, this corresponds to the number of the bypass valves in the representative area 1a and from which steam leakage has been detected) and the number of bypass valves Va separated inputted by e.g. a keyboard operation and relating to the representative pining portion 3a in the steam piping 3, a ratio of the steam-leaking valves relative to the bypass valves in the representative piping portion 3a of the steam piping 3 is also calculated as a defective valve ratio Kv.
(h) Based on the calculation conditions (especially, the fluid item) for each leaking point of the diagnosis result inputted from the leakage diagnotor 12, there are calculated sub total values ∑qs, ∑qp, ∑qn (i.e. fluid leakage loss sub total for each type of fluid of steam, compressed air and nitrogen gas) obtained by aggregating fluid loss amounts q (qs, qp, qn) at each leaking point for each of the representative piping portions 3a, 5a, 6a of the respective piping 3, 5, 6. Further, by multiplying these fluid leakage loss sub totals ∑qs, ∑qp, ∑qn for each fluid type by a unit price of each fluid type, there are also obtained monetary converted values M∑qs, M∑qp, M∑qn of the fluid leakage loss sub totals ∑qs, ∑qp, ∑qn for each fluid type.
(i) Based on the bypass valve number V for the entire steam piping 3 in the target system 1 separately inputted via e.g. a keyboard and the bypass valve number Va for its representative piping portion 3a, by multiplying a ratio value of these valve numbers (V/Va) with the fluid leakage sub total ∑qs, there is calculated a deduced value of the total steam leakage loss amount Qs (that is, the value obtained by aggregating the steam loss amounts qs due to leakage from the bypass valves for the entire steam piping 3 of the target system 1) as well as its monetary converted value MQs.
   In addition, as to the compressed air piping 5 and the nitrogen gas piping 6 for which leakage from their joints, pipes, and piping-connected apparatuses, in addition to the leakage from their valves, are to be diagnosed, based on the total piping amounts X, Y of the target system 1 and the piping amounts Xa, Ya of the representative piping portions 5a, 6a separately inputted also via keyboard operations, by multiplying the fluid leakage loss sub totals ∑qp, ∑qn of the compressed air and the nitrogen gas with a ratio value of these piping amounts (X/Xa), (Y/Ya), there is calculated a deduced value of a total compressed-air leakage loss amount Qp for the entire compressed air piping 5 of the target system 1 (i.e. the value obtained by aggregating compressed air loss amounts qp of leakage from respective portions of the compressed air piping 5) and there is also calculated a deduced value of a total nitrogen-gas leakage loss amount Qn for the entire nitrogen gas piping 6 of the target system 1 (i.e. the value obtained by aggregating nitrogen gas loss amounts qn of leakage from respective portions of the nitrogen gas piping 6). And, their monetary converted values MQp, MQn are also calculated. That is to say, based on the diagnosis results for the respective representative piping portions 3a, 5a, 6a inputted from the leakage diagnotor 12,
   the bypass valve number V for the entire steam piping 3 and the bypass valve number Va, and the total piping amounts X, Y of the target system 1 and the piping amounts Xa, Ya of the representative piping portions 5a, 6a thereof, separately inputted as the evaluation amount ratio information RV, RX, RY,
   there are calculated the deduced values of the total fluid leakage loss amounts Qs, Qp, Qn for the respective fluid types as well as their monetary converted values MQs, MQp, MQn.
(j) Based on the total receiving steam amount Qi and the total necessary steam amount Qo for the entire target system 1 separated inputted via e.g. keyboard operations, there are calculated a total unknown seam amount Qx as a difference therebetween and its monetary converted value MQx. Further, a ratio of the total unknown steam amount Qx relative to the total receiving steam amount Qi is calculated as an unknown steam ratio Kx.
   Further, there is calculated a sum total steam loss amount Qts (=Qt" + Qs) by adding together the sum total trap-passed steam loss amount Qt" (=Qt + Qt') and the total leakage loss amount Qs for steam included in the total fluid leakage loss amounts Qs, Qp, Qn for the respective fluid types and there is calculated also its monetary converted value MQts. Further, by using this sum total steam loss amount Qts as a total amount of steam loss improvable in the steam piping 3 (that is, the total amount of steam loss which can be solved by replacement of the steam traps 2 in the steam piping 3 and repair of the steam leaking portions in the steam piping 3) a ratio of the sum total steam loss amount Qts (total improvable steam loss amount) relative to the total unknown steam amount Qx is calculated as an improvable unknown steam ratio Kts.
   And, by subtracting the sum total steam loss amount Qts (the total improvable steam loss amount) from the total unknown steam amount Qx, there is obtained a total basis unknown steam amount Qxx. And, a ratio of the total basis unknown steam amount Qxx (i.e. the total amount of steam loss remaining even after the improvement) relative to the amount obtained by subtracting the sum total steam loss amount Qts from the total receiving steam amount Qi (i.e. total receiving steam amount after the improvement) is obtained as an improved unknown steam ratio Kxx.
   That is to say, the sum total steam loss amount Qts is the amount of steam loss which can be solved by trap replacement and repair of steam leaking portions. Whereas, the total basis unknown steam amount Qxx is an amount of steam loss due to evaporation of steam by heat discharge, which cannot be solved by such trap replacement or repair of steam leaking portions. Therefore, the improvable unknown steam ratio Kts indicates a ratio of the steam loss amount which can be solved by trap replacement and repair of steam leaking portions, in the total unknown steam amount Qx (i. e. indicates what specific ratio of reduction in the steam loss for the entire stem piping 3 of the target system 1 is possible by the two factors of the trap replacement and the repair of the steam leaking portions).
   Further, the unknown steam ratio Kx and the improved unknown steam ratio Kxx indicate the ratio of reduction in the total unknown steam amount Qx realized by the trap replacement and the repair of the steam leaking portions, in the form of comparison between these two values Kx, Kxx.
   In addition to the above-described calculation operations, in response to an instruction from the maker attendant, the diagnosing computer system 11 automatically carries out a data generating operation based on the results of the above-described calculations (a) through (j) and the pre-inputted information. In this data generating operation, there is generated comprehensive evaluation electronic data D whose contents are displayed as shown in Figs. 6-11 in the form of printed paper sheets or on a display unit of the computer system (step of data generating).
   More particularly, this electronic data D, when displayed on printed paper sheets or a display screen, includes items of "front page of report" showing the date of diagnoses, an item of "steam input/output", an item of "details of unknown steam", an item of "results of trap operation diagnosis and fluid leakage diagnosis", an item of "result of system improvement diagnosis", an item of "result of maintenance improvement diagnosis" and an item of "conclusion of diagnoses" and these items have contents (k) through (p) as follow.
(k) In the item of steam input/output (Fig. 7), there is displayed a table of steam input/output showing the respective details of the total receiving steam amount Qi, the total necessary steam amount Qo and the total unknown steam amount Qx and relationships among them.
(l) In the item of the details of unknown steam (Fig. 8), there are shown a column showing the unknown steam ratio Kx, the total unknown steam amount Qx and its monetary converted value MQx, a column showing the sum total steam loss amount Qts (the total improvable steam loss amount) and the improvable unknown steam ratio Kts and a monetary converted value MQts of the sum total steam loss amount Qts as a monetary amount obtained by the improvement and a column showing the improved unknown steam ratio Kxx, in the mentioned order.
(m) The item of the results of trap operation diagnosis and the fluid leakage diagnosis (Fig. 9) is divided into an item of the trap operation diagnosis, an item of the steam piping leakage diagnosis and an item of non-steam piping leakage diagnosis.
   In the item of the trap operation diagnosis, there are displayed a column showing the trap defect ratio Kt, the sub total of trap-passed steam loss due to trap defect ∑qs and its monetary converted value M∑qs, the total number of representative steam traps Ta, the numbers Ta1, Ta2,.....of the respective usages and types of the representative steam traps 2a, the trap defect ratios Kt1, Kt2,....of the respective usages and types of the representative steam traps 2a, itemized values M∑qs1, M∑qs2,....of the respective usages and types of the representative steam traps 2a, and the simulation number ratio α, a column showing the total number of steam trap T of the target system 1, the total trap-passed steam loss amount Qt due to trap defect and its monetary converted value MQt, the total trap-passed steam loss amount Qt' due to trap type and its monetary converted value MQt' and the sum total trap-passed steam loss amount Qt" and its monetary converted value MQt".
   And, in the item of the steam piping leakage diagnosis, there are displayed a column showing the number of bypass valves installed Va for the representative piping portion 3a of the steam piping 3, the valve defect ratio Kv, the number of leaking points Ns (that is, the number of bypass values whose steam leakage has been detected) for the representative piping portion 3a of the steam piping 3., the sub total of the fluid leakage loss ∑qs for steam and its monetary converted value M∑qs and a column showing the number of bypass valves installed V for the entire steam piping 3 of the target system 1, the total steam leakage loss amount Qs and its monetary converted value MQs.
   And, in the item of the non-steam piping leakage diagnosis, there are displayed a column showing the number of leaking points Np for the representative piping portion 5a of the compressed air piping 5, the sub total of the fluid leakage loss ∑qp for compressed air and its monetary converted value M∑qp, a column showing the number of leaking points Nn for the representative piping portion 6a of the nitrogen gas piping 6, the sub total of the fluid leakage loss ∑qn for nitrogen gas and its monetary converted value M∑qn, and a column showing the total compressed air leakage loss amount Qp and its monetary converted value MQp and the total nitrogen gas leakage loss amount Qn and its monetary converted value MQn.
(n) In the item of result of system improvement diagnosis (Fig. 10), as the result of the system improvement diagnosis, there are displayed system improvement proposals for respective existing system constructions having room for improvement and inputted to the diagnosing computer system 11 in the form of itemized statements. Further, in the respective display items of these improvement proposals, in addition to the system improvement proposals, as an economic advantage, there are displayed the monetary amounts of the effect Ma1, Ma2....(namely, the monetary amount of cost saving in the respects of energy saving or productivity expected to be achieved by implementing the system improvement proposals) and the implementing costs Ha1, Ha2...of the system improvement proposals.
(o) In the item of the result of the maintenance improvement diagnosis (Fig. 10), there are displayed, in the form of itemized statements, method improvement proposals for the respective existing maintenance methods having room for improvement inputted to the diagnosing computer system 11. Further, in the respective display items of these improvement proposals, in addition to the system improvement proposals, as an economic advantage, there are displayed the monetary amounts of the effect Mb1, Mb2....(namely, the monetary amount of cost saving in the respects of energy saving or productivity expected to be achieved by implementing the maintenance method improvement proposals) and the implementing costs Hb1, Hb2...of the method improvement proposals.
(p) The item of the conclusion of diagnoses (Fig. 11) is divided into an item of steam, an item of non-steam fluid, an item of system, and an item of maintenance. In the item of steam, as economic advantages obtained by trap replacement and repair of steam leaking points, there are displayed the monetary converted value MQts of the sum total steam loss amount Qts (the total improvable steam loss amount) and the cost Hts required for replacement of these traps and repair of these steam leaking points.

In the item of non-steam fluid, as economic advantages obtained by repair of compressed air leaking points, there are displayed the monetary converted value MQp of the total compressed air leakage loss amount Qp and the cost Hp required for that repair. And, as the economic advantage obtained by repair of the nitrogen gas leaking points, there are displayed the monetary converted value MQn of the total nitrogen gas leakage loss amount Qn and the cost Hn required for that repair.

And, in the item of system, there are displayed a sum ∑Ma of the monetary amounts of the effects Ma1, Ma2,....obtained by the system improvement and a sum ∑Ha of the costs Ha1, Ha2 required for the system improvement. Similarly, in the item of maintenance, there are displayed a sum ∑Mb of the monetary amounts of the effects Mb1, Mb2,....obtained by the maintenance method improvement and a sum ∑Hb of the costs Hb1, Hb2 required for the maintenance method improvement.

Incidentally, though not shown, subsequent to the item of "conclusion of diagnoses", the above-described comprehensive evaluation electronic data D further includes items of "calculation" for the respective values to be displayed in the above-described items. And, like the above-described respective items, the diagnosing computer system 11 generates this "calculation" item, based on the results of the above-described calculations (a) through (j) and the pre-inputted information.

The maker attendant carries out the above-described calculating operations and the data generating operations after each of the above-described diagnoses, basically within the day of diagnosis. And, the attendant prepares a report in the form of printed paper sheets of the generated comprehensive evaluation electronic data D or a report in the form of the generated comprehensive evaluation electronic data D being displayed on the display screen. Then, on the same day, the attendant reports in a batch, i.e. at one time, to the client, the respective results of the trap operation diagnosis, the fluid leakage diagnosis, the system improvement diagnosis and the maintenance method improvement diagnosis.

And, with this batch reporting using this comprehensive evaluation electronic data D, the attendant will show the possibility of comprehensive and effective cost saving of the system to the client and will recommend comprehensive improvement of the system (that is, trap replacement, repair of leaking points, system construction improvement, maintenance method improvement) and will recommend also to the client implementation of more detailed diagnoses on the entire system for its comprehensive improvement.

Incidentally, aside from the generation of the comprehensive evaluation electronic data D, in response to an instruction from the maker attendant, the diagnosing computer system 11 generates also a tap managing data source material, piping managing data source material, a system managing data source material, a maintenance managing data source material, etc. based on the pre-inputted information and/or the results of the calculating operations.

Summarizing the above, in the system diagnosing method of this embodiment, there are grasped the total receiving steam amount Qi as a total amount of steam supplied to the evaluation target steam piping 3 in the target system 1 and the total necessary steam amount Qo as a total amount of steam needed by the steam using apparatus 4 of the evaluation target steam piping 3. Further, there is grasped, as the total improvable steam loss amount Qts, the total amount of steam loss which can be solved by the predetermined improvement (replacement of the evaluation target steam traps 2 and the repair of the steam leaking portions) in the evaluation target steam piping 3.

And based on the respective total amounts grasped as above, a ratio of the total improvable steam loss amount Qts relative to the total unknown steam amount Qx which is the difference between the total receiving steam amount Qi and the total necessary steam amount Qo, is obtained as the improvable unknown steam ratio Kts.

Further, the ratio of the total unknown steam amount Qx relative to the total receiving steam amount Qi is obtained as the unknown steam ratio Kx. And, the value obtained by subtracting the total improvable steam loss amount Qts from the total unknown steam amount Qx is obtained as the total basis unknown steam amount Qxx. Then, a ratio of this total basis unknown steam amount Qxx relative to the value obtained by subtracting the total improvable steam loss amount Qts from the total receiving steam amount Qi is obtained as the improved unknown steam ratio Kxx.

Specifically, there are carried out the trap operation diagnosis for diagnosing operational conditions of a plurality of evaluation target steam traps 2 and steam leakage diagnosis for diagnosing steam leakage from respective piping portions of the evaluation target steam piping 3.

And, based on the result of the trap operation diagnosis, there is calculated the total trap-passed steam loss amount Qt" (the sum total trap-passed steam loss amount) which is an amount obtained by aggregating the trap-passed steam loss amounts (qt + Δqt) for all the evaluation target steam traps).

Based on the result of the steam leakage diagnosis, there is calculated the total steam leakage loss amount Qs which is an amount obtained by aggregating the steam loss amounts qs due to leakage from the respective piping portions for the entire evaluation target steam piping 3.

Then, by using the sum total steam loss amount Qts which is the sum of the total trap-passed steam loss amount Qt" and the total steam leakage loss amount Qs, as the total improvable steam loss amount, there are obtained the improvable unknown stem ratio Kts, the unknown steam ratio Kx and the improved unknown steam ratio Kxx described above.

Further, in the trap operation diagnosis, there is employed the method in which operational conditions of some steam traps 2a (representative steam traps) selected from the evaluation target steam traps 2 are diagnosed by the trap diagnotor 8 and based on the result of this diagnosis of some steam straps 2a and the number ratio information RT between these some stream traps 2a selected and all the evaluation target steam traps 2, the trap-passed steam loss Qt" (the sum total trap-passes steam loss amount) for all the evaluation target steam traps 2 is deductively calculated.

Similarly, in the fluid leakage diagnosis (steam leakage diagnosis), there is employed the method in which steam leakage, if any, from some respective piping portions 3a (representative piping portions) of the evaluation target steam piping 3 are diagnosed by the leakage diagnotor 12 and based on the result of this diagnosis of some piping portion 3a and the evaluation amount ratio RV between the some piping portion 3a and the entire evaluation target steam piping 3, the steam leakage loss Qs for the entire evaluation target steam piping 3 is deductively calculated.

On the other hand, in this embodiment, the diagnosing computer system 11 constitutes an aggregating system for system diagnosis for aggregating the results of the above-described diagnoses (see Fig. 4 and Fig. 5). A connecting portion 11a and a keyboard 11b of this diagnosing computer system 11 for connection with the respective diagnotors 8, 12 constitute an inputting means S1 as described next. Namely, the computer system constitutes the inputting means S1 for receiving the inputs of the result of the trap operation diagnosis and the fluid leakage diagnosis from the trap diagnotor 8 and the leakage diagnotor 12 respectively and receiving also inputs of the total receiving steam amount Qi and the total necessary steam amount Qo of the evaluation target steam piping 3.

Also, a computing section 11c of the diagnosing computer system 11 constitutes a calculating means S2 as described next.

With this calculating means S2, based on the result of the trap operation diagnosis inputted to the inputting means S1 (specifically, its diagnosis result and the number ratio information RT), there is calculated the trap-passed steam loss amount Qt" (sum total trap-passed steam loss amount) which is an amount obtained by aggregating the trap-passed steam loss amounts (qt + Δqt) for all the evaluation target steam traps). And, based on the result of the steam leakage diagnosis inputted to the inputting means S1 (specifically, its diagnosis result and the evaluation amount ratio information RV), there is calculated the total steam leakage loss amount Qs which is an amount obtained by aggregating the steam loss amounts qs due to leakage from the respective piping portions for the entire evaluation target steam piping 3.

Then, based on the total receiving steam amount Qi and the total necessary steam amount Qo inputted to the inputting means S1, the ratio of the sum total steam loss amount Qts which is the sum of the total trap-passed steam loss amount Qt" (sum total trap-passed steam loss amount) and the total steam leakage loss amount Qs, relative to the total unknown steam amount Qx which is the difference between the total receiving steam amount Qi and the total necessary steam amount Qo is calculated as the improvable unknown steam ratio Kts. Further, the ratio of the total unknown steam amount Qx relative to the total receiving steam amount Qi and the ratio of the total basis unknown steam amount Qxx relative to a value obtained by subtracting the sum total steam loss amount Qts from the total receiving steam amount Qi, the total basis unknown steam amount Qxx being a value obtained by subtracting the sum total steam loss amount Qts from the total unknown steam amount Qx, are calculated as the unknown steam ratio Kx and the improved unknown steam ratio Kxx, respectively.

And, the computing section 11c of the diagnosing computer system 11 constitutes a data generating means S3 for generating the evaluation data D, based on the calculation results of the calculating means S2, having contents indicative of the unknown steam ratio Kx, the total unknown steam amount Qx, the sum total steam loss amount Qts, the improvable unknown steam ratio Kts, the improved unknown steam ratio Kxx, etc.

Further, the printer 11d and the display 11e of the diagnosing computer system 11 constitute an outputting means S4 for outputting the evaluation data D generated by the data generating means S3 in a such a manner to be readable by humans.

### [other embodiments]

Next, other embodiments of the present invention will be specifically described.

The method of inputting the diagnosis results from the respective diagnotors 8, 12 to the aggregating system 1 (diagnosing computer system) is not limited to the method through direct wired or wireless connection of the respective diagnotors 8, 12 to the aggregating system 11. The method can be inputting via a portable storage medium or via Internet, a telephone network or the like.

Also, in the foregoing embodiment, the trap-passed steam loss amount qt and the fluid leakage loss amounts qs, qp,qn calculated on the side of the respective diagnotors 8, 12 are inputted as the diagnosis results to the aggregating system 11. Instead, there may be employed a method in which only the various detection values are inputted as the diagnosis results to the aggregating system 11 and then the trap-passed steam loss amount qt of each steam trap 2 (2a) and the steam leakage loss amounts qs for each leaking point are calculated on the side of the aggregating system 11.

The evaluation target steam piping 3 need not be the entire steam piping of the diagnosis target system 1. Instead, this may be steam piping portion for a particular use in the diagnosis target system 1. Further, in the foregoing embodiment, in the trap operation diagnosis, all of the steam traps 2 of the target system1 are set as the evaluation target steam traps. Instead, only steam traps 2 of a particular type or for particular usage in the target system 1 may be set as the evaluation target steam traps.

In the foregoing embodiment, the sum total trap-passed steam loss amount Qt" obtained by adding together the total trap-passed steam loss amount Qt due to trap defect and the total trap-passed steam loss amount Qt' due to trap model is set as the total trap-passed steam loss amount to be calculated based on the result of the trap operation diagnosis. However, instead of this, with omission of the total trap-passed steam loss amount Qt' due to trap type from the calculation target, only the total trap-passed steam loss amount Qt due to trap defect may be set as the calculation target total trap-passed steam loss amount.

Incidentally, in this case, a sum of the total steam leakage loss amount Qs and the total trap-passed steam loss amount Qt due to trap defect will be the sum total steam loss amount Qts.

Further, in case the total trap-passed steam loss amount Qt' due to trap type is included in the calculation target, the type of each trap required for obtaining the trap-passed steam amount difference Δqt' of each steam trap 2 (2a) may not be inputted from the trap diagnotor 8 to the aggregating system 11. The type may be inputted in any other manner to the aggregating system 11.

In the foregoing embodiment, the two values, i.e. the total receiving steam amount Qi and the total necessary steam amount Qo, are inputted to the aggregating system 11 for calculating the total unknown steam amount Qx. Instead of this, the total unknown steam amount Qx may be inputted to the aggregating system 11 for calculating the values of the improvable unknown steam ratio Kts., the unknown steam ratio Kx, the improved unknown steam ratio Kxx, etc.

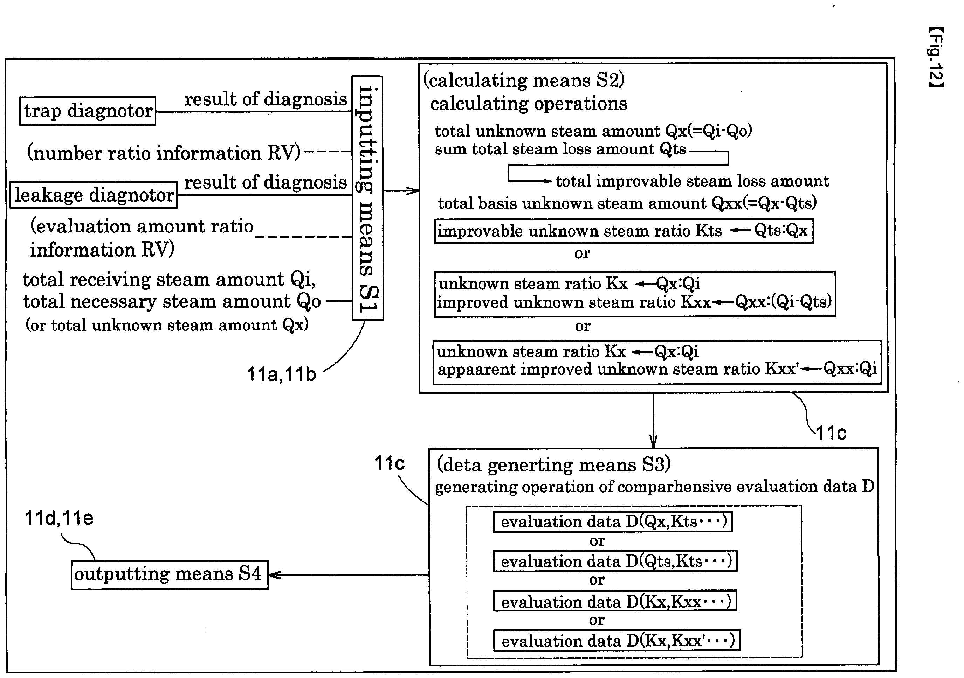

In the foregoing embodiment, the improvable unknown steam ratio Kts, the unknown steam ratio Kx, the improved unknown steam ration Kxx, etc. are obtained as index values indicating what specific ratio of reduction is possible by the predetermined system improvement in the steam loss (the total unknown steam amount Qx) in the evaluation target steam piping 3. However, in embodying the present invention, as shown in Fig. 12, it may be possible to obtain, as such index values, at least the improvable unknown steam ratio Kxx, or to obtain, as such index values, at least the unknown steam ratio Kx and the apparent improved unknown steam ratio Kxx' (the ratio of the total basis unknown steam amount Qxx relative to the total receiving steam amount Q).

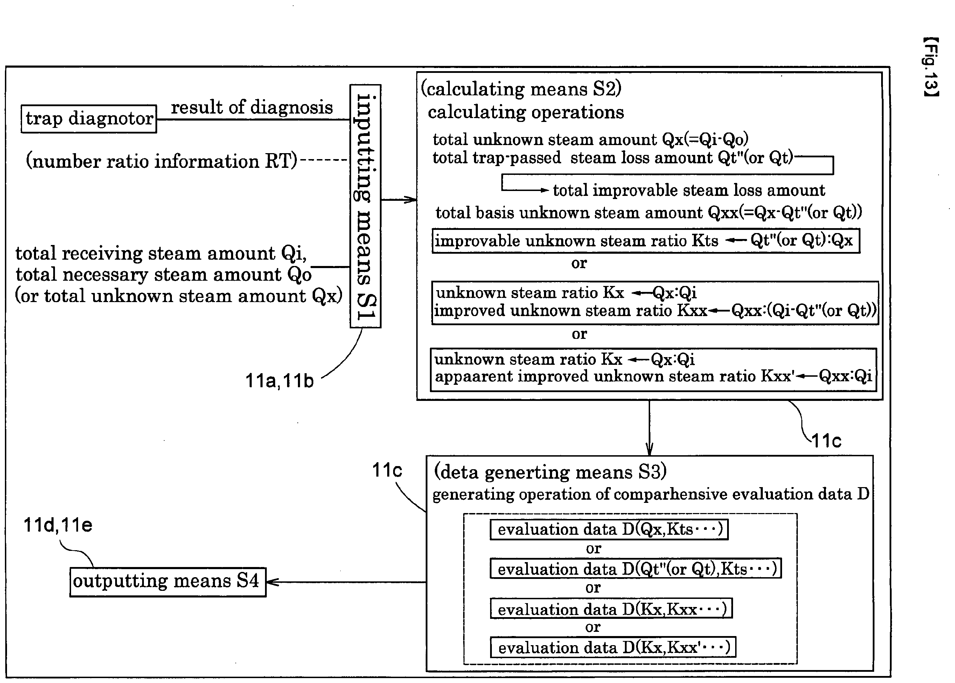

In the foregoing embodiment (see Fig. 12), the index values (the improvable unknown steam ratio Kts, the unknown steam ratio Kx, the improved unknown steam ratio Kxx, the apparent improved unknown steam ratio Kxx') are obtained with using the sum total steam loss amount Qts which is the sum of the total trap-passed steam loss amount Qt" (or Qt) and the total steam leakage loss amount Qs, as the total improvable steam loss amount, so as to allow grasp of what specific ratio of reduction is possible in the steam loss in the evaluation target steam piping 3 by the system improvement through the two factors, i.e. the replacement (or repair) of the evaluation target steam traps and the repair of the steam leaking portions. Instead, as shown in Fig. 13, with omitting the steam loss due leakage from the evaluation target, the index values (the improvable unknown steam ratio Kts, the unknown steam ratio Kx, the improved unknown steam ratio Kxx, the apparent improved unknown steam ratio Kxx') are obtained with using the total trap-passed steam loss amount Qt" (or Qt) alone as the total improvable steam loss amount, so as to allow grasp of what specific ratio of reduction is possible in the steam loss in the evaluation target steam piping 3 by the system improvement through the replacement (or repair) of the evaluation target steam traps.

Further, depending on the case, with omitting the steam loss due to trap passage from the evaluation target, the index values (the improvable unknown steam ratio Kts, the unknown steam ratio Kx, the improved unknown steam ratio Kxx, the apparent improved unknown steam ratio Kxx') are obtained with using the steam leakage loss amount Qs alone as the total improvable steam loss amount, so as to allow grasp of what specific ratio of reduction is possible in the steam loss in the evaluation target steam piping 3 by the system improvement through the repair of the steam leaking portions.

The method of obtaining the total trap-passed steam loss amount Qt" (or Qt) based on the result of the trap operation diagnosis (see Fig. 12 and Fig. 13) can be either the one employed in the foregoing embodiment in which the deduced value of the total trap-passed steam loss amount Qt" (or Qt) is obtained, based on the result of trap operation diagnosis performed on some steam trap 2a (representative steam traps) selected from the evaluation target stem traps 2 or a method in which with omission of the input of the number ratio information Rt, the total trap-passed steam loss amount Qt" (or Qt) is obtained in a non-deductive manner, based on the result of trap operation diagnosis performed on all of the evaluation target steam traps 2.

Also, similarly, as the method of obtaining the total steam leakage loss amount Qs based on the result of the steam leakage diagnosis (see Fig. 12 and Fig. 13), the method may be the one employed in the foregoing embodiment in which based on the result of the steam leakage diagnosis effected on some piping portion 3a (representative piping portion) of the evaluation target steam piping 3 and on the evaluation amount ratio information RV, the deduced value of the total steam leakage loss amount Qs is obtained. Or, the method may be such that with omission of the evaluation amount ratio information RV, based on the result of steam leakage diagnosis actually effected on the entire evaluation target steam piping 3, the total steam leakage loss amount Qs is obtained in a non-deductive manner.

The number ratio information RT inputted to the aggregating system 11 separately from the input of the result of diagnosis from the trap diagnotor 8 can be information of any contents as long as such information enables the aggregating system 11 to grasp the number ratio between all the evaluation target steam traps 2 and some steam traps 2a (representative steam traps) on which the diagnosis by the trap diagnotor 8 has been carried out. Further, the evaluation amount ratio information RV inputted to the aggregating system 11 separately from the input of the result of diagnosis from leakage diagnotor 12 can be information of any contents as long as such information enables the aggregating system 11 to grasp the ratio of evaluation amounts (the number of valves, the amount of piping, etc.) between the entire evaluation target steam piping 3 and the piping portion 3a on which the diagnosis by the leakage diagnotor 12 has been carried out.

In the foregoing embodiment, based on the calculation results of the calculating means S2, the data generating means S3 is caused to generate, as the evaluation data D (see Fig. 8), data having contents indicative of the unknown steam ratio Kx, the total unknown steam amount Qx, the sum total steam loss amount Qts as the total improvable steam loss amount, the improvable unknown steam ratio Kts, the improved unknown steam ratio Kxx, etc. Regarding this data generation (see Fig. 12 and Fig. 13), preferably, the data generating means S3 should be caused to generate the evaluation data D having contents indicative of at least the total unknown steam amount Qx and the improvable unknown steam ratio Kts, or evaluation data D having contents indicative of at least the sum total steam loss amount Qts as the total improvable steam loss amount, the total trap-passed steam loss amount Qt" (or Qt) and the improvable unknown steam ratio Kts, or evaluation data D having contents indicative of at least the unknown steam ratio Kx and the improved unknown steam ratio Kxx, or evaluation data D having contents indicative of at least the unknown steam ration Kx and the apparent improved unknown steam ratio Kxx"

The mode of displaying contents of the evaluation data D (the mode of displaying the contents to be readable by humans) is not limited to that described in the foregoing embodiment. Various modifications thereof will be possible. Further, the amount values such as the total receiving steam amount Qi, the total necessary steam amount Qo, the total unknown steam amount Qx, the total improvable steam loss amount, the total trap-passes steam loss amount Qt (or Qt"), the sum total steam loss amount Qts, etc. need not be expressed, in their calculations and data representations, using the substance amounts (weights, volumes) thereof, but may be expressed using their monetary converted values.

In the foregoing embodiment, different diagnotors are employed as the trap diagnotor 8 and the leakage diagnotor 12. However, a common diagnotor acting for both trap operation diagnosis and steam leakage diagnosis may be employed for effecting the trap operation diagnosis and the steam leakage diagnosis.

### INDUSTRIAL APPLICABILITY

The present invention may be used in diagnoses of systems of various fields, such as a chemical plant, including steam piping system.

### BRIEF DESCRIPTION OF THE DRAWINGS

[Fig. 1] a view schematically showing an entire construction of a system,
[Fig. 2] a view showing a trap diagnotor and its usage,
[Fig. 3] a view showing a leakage diagnotor and its usage,
[Fig. 4] a block diagram of a diagnosing computer system,
[Fig. 5] a view showing contents of calculation operations of the diagnosing computer system,
[Fig. 6] a view showing evaluation data,
[Fig. 7] a view showing evaluation data,
[Fig. 8] a view showing evaluation data,
[Fig. 9] a view showing evaluation data,
[Fig. 10] a view showing evaluation data,
[Fig. 11] a view showing evaluation data,
[Fig. 12] a block diagram of an aggregating system showing a further embodiment,
[Fig. 13] a block diagram of an aggregating system showing a further embodiment.

### DESCRIPTION OF REFERENCE MARKS

- 2: evaluation target steam traps
- 3: evaluation target steam piping
- 4: steam using apparatus
- 8: trap diagnotor
- 11: aggregating system (diagnosing computer system)
- 12: leakage diagnotor
- D: evaluation data
- Kts: improvable unknown steam ratio
- Kx: unknown steam ratio
- Kxx: improved unknown steam ratio
- Kxx': apparent improved unknown steam ratio
- Qi: total receiving steam amount
- Qo: total necessary steam amount
- Qs: total steam leakage loss amount
- Qt": total trap-passed steam loss amount (sum)
- Qt: total trap-passed steam loss amount (trap defect)
- Qts: sum total steam loss amount
- Qx: total unknown steam amount
- Qxx: total basis unknown steam amount
- S1: inputting means
- S2: calculating means
- S3: data generating means

## Claims

1. A method of operating a system for diagnosing a steam trap system (1) having a plurality of steam traps (2), the system having an inputting means (S1) comprising a connecting portion (11a) for connection with a trap diagnotor (8), and a calculating means (S2), the method having an inputting step of receiving, from the trap diagnotor (8), when connected to the connecting portion (11a), via the inputting means (S1), inputs of result of a trap operation diagnosis performed by the trap diagnotor (8) for diagnosing operational conditions of a plurality of evaluation target steam traps (2) mounted in an evaluation target steam piping (3) and inputs of a total receiving steam amount (Qi) and a total necessary steam amount (Qo) of the evaluation target steam piping (3);
**characterized in that**
said inputting step inputs said total receiving steam amount (Qi) and said total necessary steam amount (Qo) or an input of a total unknown steam amount (Qx) which is a difference between the total receiving steam amount (Qi) and the total necessary steam amount (Qo);
said method comprises the steps of:
calculating, by said calculating means (S2) and based on the result of the trap operation diagnosis inputted to the inputting means (S1), a total trap-passed steam loss amount (Qt) obtained by aggregating trap-passed steam loss amounts for all the evaluation target steam traps; and
1) based on the total receiving steam amount (Qi) and the total necessary steam amount (Qo):
calculating the total unknown steam amount (Qx) and calculating a ratio of the total unknown steam amount (Qx) relative to the total receiving steam amount (Qi) and a ratio of a total basis unknown steam amount (Qxx) relative to a value obtained by subtracting the total trap-passed steam loss amount (Qt) from the total receiving steam amount (Qi) as an unknown steam ratio (Kx) and an improved unknown steam ratio (Kxx), respectively, said total basis unknown steam amount (Qxx) being a value obtained by subtracting the total trap-passed steam loss amount (Qt) from the total unknown steam loss amount (Qx); or
calculating the total unknown steam amount (Qx) and calculating a ratio of the total unknown steam amount (Qx) relative to the total receiving steam amount (Qi) and a ratio of a total basis unknown steam amount (Qxx) relative to the total receiving steam amount (Qi) as an unknown steam ratio (Kx) and an apparent improved unknown steam ratio (Kxx'), respectively, said total basis unknown steam amount (Qxx) being a value obtained by subtracting the total trap-passed steam loss amount (Qt) from the total unknown steam loss amount (Qx);
2) based on either the total receiving steam amount (Qi) and the total necessary steam amount (Qo) or the total unknown steam amount (Qx) inputted to the inputting means (S1) calculating a ratio of the total trap-passed steam loss amount (Qt) relative to the total unknown steam amount (Qx) which is the difference between the total receiving steam amount (Qi) and the total necessary steam amount (Qo), as an improvable unknown steam ratio (Kts).

2. A method of operating a system for diagnosing a steam trap system (1) having a plurality of steam traps (2), the system having an inputting means (S1) comprising a connecting portion (11a) for connection with a trap diagnotor (8) and with a leakage diagnotor (12) and a calculating means (S2), the method having an inputting step of receiving, from the trap diagnotor (8), when connected to the connecting portion (11a), via the inputting means (S1), inputs of result of a trap operation diagnosis performed by the trap diagnotor (8) for diagnosing operational conditions of a plurality of evaluation target steam traps (2) mounted in an evaluation target steam piping (3) and, from the leakage diagnotor (12), when connected to the connecting portion (11a), a steam leakage diagnosis performed by the leakage diagnotor (12) for diagnosing steam leakage from respective piping portions of the evaluation target steam piping and inputs of a total receiving steam amount (Qi) and a total necessary steam amount (Qo) of the evaluation target steam piping (3);
**characterized in that**
said inputting step inputs said total receiving steam amount (Qi) and said total necessary steam amount (Qo) or an input of a total unknown steam amount (Qx) which is a difference between the total receiving steam amount (Qi) and the total necessary steam amount (Qo);
said method comprises the steps of:
calculating, by said calculating means (S2) and based on the result of the trap operation diagnosis inputted to the inputting means (S1), a total trap-passed steam loss amount (Qt) obtained by aggregating trap-passed steam loss amounts for all the evaluation target steam traps;
calculating, by said calculating means (S2) and based on a result of the steam leakage diagnosis inputted to the inputting means (S1), a total steam leakage loss amount (Qs) obtained by aggregating steam leakage loss amounts from the respective piping portions;
based on the total receiving steam amount (Qi) and the total necessary steam amount (Qo) or the total unknown steam amount (Qx) inputted to the inputting means (S1),
calculating a ratio of a sum total steam loss amount (Qts) relative to the total unknown steam amount (Qx) which is the difference between the total receiving steam amount (Qi) and the total necessary steam amount (Qo) as an improvable unknown steam ratio (Kts), said sum total steam loss amount (Qts) being a sum of the total trap-passed steam loss amount (Qt) and the total steam leakage loss amount (Qs), or;
calculating a ratio of the total unknown steam amount (Qx) relative to the total receiving steam amount (Qi) and a ratio of a total basis unknown steam amount (Qxx) relative to a value obtained by subtracting the sum total steam loss amount (Qts) from the total unknown steam amount (Qx), as an unknown steam ratio (Kx) and an improved unknown steam ratio (Kxx), respectively;
calculating a ratio of the total unknown steam amount (Qx) relative to the total receiving steam amount (Qi) and a ratio of a total basis unknown steam amount (Qxx) relative to the total receiving steam amount (Qi) as an unknown steam ratio (Kx) and an apparent improved unknown steam ratio (Kxx'), respectively, said total basis unknown steam amount (Qxx) being a value obtained by subtracting the sum total steam loss amount (Qts) from the total unknown steam amount (Qx).

3. The method of operating a system for steam trap system diagnosis according to claim 1 or 2, **characterized in that** the method further comprises the step of data generating step performed, based on the calculation results of the calculating means (S2), by a data generating means (S3) included in the system for system diagnosis for generating evaluation data (D) having contents indicative of at least the total unknown steam amount (Qx) and the improvable unknown steam ratio (Kts) or evaluation data (D) having contents indicative of at least the total trap-passed steam loss amount (Qt), the sum total steam loss amount (Qts) and the improvable unknown steam ratio or evaluation data having contents indicative of at least the unknown steam ratio (Kx) and the improved unknown steam ratio (Kxx) or evaluation data having contents indicative of at least the unknown steam ratio (Kx) and the apparent improved unknown steam ratio (Kxx').

4. A system for steam trap system diagnosis, comprising:
a trap diagnotor (8),
a leakage diagnotor (12), and
inputting means (S1) comprising a connecting portion (11a) for connection with the trap diagnotor (8) and the leakage diagnotor (12), said inputting means (S1) further comprising a user interface (11b) for providing user input, said inputting means (S1) adapted to
receive from the trap diagnotor (8), when connected to the connecting portion (11a), results of a trap operation diagnosis performed by the trap diagnotor (8) for diagnosing operational conditions of at least a part of a plurality of evaluation target steam traps (2) mounted in an evaluation target steam piping (3), and receive from the leakage diagnotor (12), when connected to the connecting portion (11a), a steam leakage diagnosis performed by the leakage diagnotor (12) for diagnosing steam leakage from at least a part of respective piping portions of the evaluation target steam piping (3) and
receive, via the user interface (11b), inputs of a total receiving steam amount (Qi) and a total necessary steam amount (Qo) or an input of a total unknown steam amount (Qx) which is a difference between the total receiving steam amount (Qi) and the total necessary steam amount (Qo), of the evaluation target steam piping (3),
**characterized in that**
said inputting means (S1) further adapted to receive, separately from said trap diagnotor (8) and said leakage diagnotor (12), when connected to the connecting portion (11a),
trap number ratio information (RT) between the evaluation target steam traps (2) diagnosed and all the evaluation target steam traps (2), and
evaluation amount ratio information (RV) between the piping portions diagnosed and all the evaluation target steam piping (3);
the system further comprising calculating means (S2) for calculating, based on the result of the trap operation diagnosis and the trap number ratio information (RT) inputted to the inputting means (S1), a total trap-passed steam loss amount (Qt) obtained by aggregating trap-passed steam loss amounts for all the evaluation target steam traps (2);
said calculating means (S2) calculating also, based on a result of the steam leakage diagnosis and the evaluation amount ratio information (RV) inputted to the inputting means (S1), a total steam leakage loss amount (Qs) obtained by aggregating steam leakage loss amounts from the respective piping portions for the entire evaluation target steam piping (3);
based on the total receiving steam amount (Qi) and the total necessary steam amount (Qo) or the total unknown steam amount (Qx) inputted to the inputting means (S1),
said calculating means (S2) further calculating a ratio of a sum total steam loss amount (Qts) relative to the total unknown steam amount (Qx) which is the difference between the total receiving steam amount (Qi) and the total necessary steam amount (Qo) as an improvable unknown steam ratio (Kts), said sum total steam loss amount (Qts) being a sum of the total trap-passed steam loss amount (Qt) and the total steam leakage loss amount (Qs), or;
said calculating means (S2) further calculating a ratio of the total unknown steam amount (Qx) relative to the total receiving steam amount (Qi) and a ratio of a total basis unknown steam amount (Qxx) relative to a value obtained by subtracting the sum total steam loss amount (Qts) from the total receiving steam amount (Qi) as an unknown steam ratio (Kx) and an improved unknown steam ratio (Kxx), respectively, said total basis unknown steam amount (Qxx) being a value obtained by subtracting the sum total steam loss amount (Qts) from the total unknown steam loss, or;
calculating a ratio of the total unknown steam amount (Qx) relative to the total receiving steam amount (Qi) and a ratio of a total basis unknown steam amount (Qxx) relative to the total receiving steam amount (Qi) as an unknown steam ratio (Kx) and an apparent improved unknown steam ratio (Kxx'), respectively, said total basis unknown steam amount (Qxx) being a value obtained by subtracting the sum total steam loss amount (Qts) from the total unknown steam amount (Qx).

5. The system according to claim 4, **characterized in that** the system further comprises data generating means (S3) for generating, based on the calculation results of the calculating means (S2), evaluation data (D) having contents indicative of at least the total unknown steam amount (Qx) and the improvable unknown steam ratio (Kts) or evaluation data having contents indicative of at least the total trap-passed steam loss amount (Qt), the sum total steam loss amount (Qts) and the improvable unknown steam ratio (Kts) or evaluation data (D) having contents indicative of at least the unknown steam ratio (Kx) and the improved unknown steam ratio (Kxx) or evaluation data (D) having contents indicative of at least the unknown steam ratio (Kx) and the apparent improved unknown steam ratio (Kxx').

## Patentansprüche

1. Verfahren zum Betreiben eines Systems zum Diagnostizieren eines Kondensatableitersystems (1), das eine Mehrzahl von Kondensatableitern (2) hat, wobei das System ein Eingabemittel (S1), das einen Verbindungsteil (11a) zur Verbindung mit einer Abieiter-Diagnoseeinrichtung (8) umfasst, und ein Berechnungsmittel (S2) hat, wobei das Verfahren einen Eingabeschritt zum Empfangen, von der Ableiter-Diagnoseeinrichtung (8), wenn sie mit dem Verbindungsteil (11a) verbunden ist, über das Eingabemittel (S1), von Eingaben von Ergebnissen einer Ableiter-Betriebsdiagnose, die von der Ableiter-Diagnoseeinrichtung (8) durchgeführt wird, zum Diagnostizieren von Betriebsbedingungen einer Mehrzahl von Auswertungs-Ziel-Kondensatableitern (2), die in einer Auswertungs-Ziel-Dampf-Rohrleitung (3) eingebaut sind, sowie Eingaben einer gesamten Aufnahme-Dampf-Menge (Qi) und einer gesamten Bedarfs-Dampf-Menge (Qo) der Auswertungs-Ziel-Dampf-Rohrleitung (3) aufweist;
**dadurch gekennzeichnet, dass**
der Eingabeschritt die gesamte Aufnahme-Dampf-Menge (Qi) und die gesamte Bedarfs-Dampf-Menge (Qo) oder eine Eingabe einer gesamten unbekannten Dampf-Menge (Qx), die eine Differenz zwischen der gesamten Aufnahme-Dampf-Menge (Qi) und der gesamten Bedarfs-Dampf-Menge (Qo) ist, eingibt;
das Verfahren die folgenden Schritte umfasst:
Berechnen, durch das Berechnungsmittel (S2) und auf Basis des Ergebnisses der von dem Eingabemittel (S1) eingegebenen Ableiter-Betriebsdiagnose, einer gesamten Ableiter-Durchgangs-Dampf-Verlust-Menge (Qt), die durch Aufsummieren von Ableiter-Durchgangs-Dampf-Verlust-Mengen für alle Auswertungs-Ziel-Kondensatableiter erhalten wurde; und
1) auf Basis der gesamten Aufnahme-Dampf-Menge (Qi) und der gesamten Bedarfs-Dampf-Menge (Qo):
Berechnen der gesamten unbekannten Dampf-Menge (Qx) und Berechnen eines Verhältnisses der gesamten unbekannten Dampf-Menge (Qx) relativ zu der gesamten Aufnahme-Dampf-Menge (Qi) und eines Verhältnisses einer gesamten unbekannten Basis-Dampf-Menge (Qxx) relativ zu einem Wert, der durch Abziehen der gesamten Ableiter-Durchgangs-Dampf-Verlust-Menge (Qt) von der gesamten Aufnahme-Dampf-Menge (Qi) erhalten wird, als ein unbekanntes Dampfverhältnis (Kx) bzw. ein verbessertes unbekanntes Dampfverhältnis (Kxx), wobei die gesamte unbekannte Basis-Dampf-Menge (Qxx) ein Wert ist, der durch Abziehen der gesamten Ableiter-Durchgangs-Dampf-Verlust-Menge (Qt) von der gesamten unbekannten Dampf-Verlust-Menge (Qx) erhalten wird; oder
Berechnen der gesamten unbekannten Dampf-Menge (Qx) und Berechnen eines Verhältnisses der gesamten unbekannten Dampf-Menge (Qx) relativ zu der gesamten Aufnahme-Dampf-Menge (Qi) und eines Verhältnisses einer gesamten unbekannten Basis-Dampf-Menge (Qxx) relativ zu der gesamten Aufnahme-Dampf-Menge (Qi) als ein unbekanntes Dampfverhältnis (Kx) bzw. ein scheinbares verbessertes unbekanntes Dampfverhältnis (Kxx'), wobei die gesamte unbekannte Basis-Dampf-Menge (Qxx) ein Wert ist, der durch Abziehen der gesamten Ableiter-Durchgangs-Dampf-Verlust-Menge (Qt) von der gesamten unbekannten Dampf-Verlust-Menge (Qx) erhalten wird;
2) auf Basis entweder der gesamten Aufnahme-Dampf-Menge (Qi) und der gesamten Bedarfs-Dampf-Menge (Qo) oder der gesamten unbekannten Dampf-Menge (Qx), die in das Eingabemittel (S1) eingegeben wurden, Berechnen eines Verhältnisses der gesamten Ableiter-Durchgangs-Dampf-Verlust-Menge (Qt) relativ zur der gesamten unbekannten Dampf-Menge (Qx), welche die Differenz zwischen der gesamten Aufnahme-Dampf-Menge (Qi) und der gesamten Bedarfs-Dampf-Menge (Qo) ist, als ein zu verbesserndes unbekanntes Dampfverhältnis (Kts).

2. Verfahren zum Betreiben eines Systems zum Diagnostizieren eines Kondensatableitersystems (1), das eine Mehrzahl von Kondensatableitern (2) hat, wobei das System ein Eingabemittel (S1), das einen Verbindungsteil (11a) zur Verbindung mit einer Abieiter-Diagnoseeinrichtung (8) und mit einer Leckage-Diagnoseeinrichtung (12) umfasst, und ein Berechnungsmittel (S2) hat, wobei das Verfahren einen Eingabeschritt zum Empfangen, von der Ableiter-Diagnoseeinrichtung (8), wenn sie mit dem Verbindungsteil (11a) verbunden ist, über das Eingabemittel (S1), von Eingaben von Ergebnissen einer Abieiter-Betriebsdiagnose, die von der Ableiter-Diagnoseeinrichtung (8) durchgeführt wird, zum Diagnostizieren von Betriebsbedingungen einer Mehrzahl von Auswertungs-Ziel-Kondensatableiter (2), die in einer Auswertungs-Ziel-Dampf-Rohrleitung (3) eingebaut sind, und von der Leckage-Diagnoseeinrichtung (12), wenn sie mit dem Verbindungsteil (11a) verbunden ist, einer von der Leckage-Diagnoseeinrichtung (12) durchgeführten Dampf-Leckage-Diagnose zum Diagnostizieren einer Dampfleckage aus entsprechenden Rohrleitungsteilen der Auswertungs-Ziel-Dampf-Rohrleitung, sowie Eingaben einer gesamten Aufnahme-Dampf-Menge (Qi) und einer gesamten Bedarfs-Dampf-Menge (Qo) der Auswertungs-Ziel-Dampf-Rohrleitung (3) aufweist;
**dadurch gekennzeichnet, dass**
der Eingabeschritt die gesamte Aufnahme-Dampf-Menge (Qi) und die gesamte Bedarfs-Dampf-Menge (Qo) oder eine Eingabe einer gesamten unbekannten Dampf-Menge (Qx), die eine Differenz zwischen der gesamten Aufnahme-Dampf-Menge (Qi) und der gesamten Bedarfs-Dampf-Menge (Qo) ist, eingibt;
das Verfahren die folgenden Schritte umfasst:
Berechnen, durch das Berechnungsmittel (S2) und auf Basis des Ergebnisses der von dem Eingabemittel (S1) eingegebenen Abieiter-Betriebsdiagnose, einer gesamten Ableiter-Durchgangs-Dampf-Verlust-Menge (Qt), die durch Aufsummieren von Ableiter-Durchgangs-Dampf-Verlust-Mengen für alle Auswertungs-Ziel-Kondensatableiter erhalten wird;
Berechnen, durch das Berechnungsmittel (S2) und auf Basis eines Ergebnisses der in das Eingabemittel (S1) eingegebenen Dampf-Leckage-Diagnose, einer gesamten Dampf-Leckage-Verlust-Menge (Qs), die durch Aufsummieren von Dampf-Leckage-Verlust-Mengen aus den entsprechenden Rohrleitungsteilen erhalten wird;
auf Basis der gesamten Aufnahme-Dampf-Menge (Qi) und der gesamten Bedarfs-Dampf-Menge (Qo) oder der gesamten unbekannten Dampf-Menge (Qx), die in das Eingabemittel (S1) eingegeben wurden,
Berechnen eines Verhältnisses einer Gesamtsummen-Dampf-Verlust-Menge (Qts) relativ zu der gesamten unbekannten Dampf-Menge (Qx), welche die Differenz zwischen der gesamten Aufnahme-Dampf-Menge (Qi) und der gesamten Bedarfs-Dampf-Menge (Qo) ist, als ein zu verbesserndes unbekanntes Dampfverhältnis (Kts), wobei die Gesamtsummen-Dampf-Verlust-Menge (Qts) eine Summe der gesamten Ableiter-Durchgangs-Dampf-Verlust-Menge (Qt) und der gesamten Dampf-Leckage-Verlust-Menge (Qs) ist, oder;
Berechnen eines Verhältnisses der gesamten unbekannten Dampf-Menge (Qx) relativ zu der gesamten Aufnahme-Dampf-Menge (Qi) und eines Verhältnisses einer gesamten unbekannten Basis-Dampf-Menge (Qxx) relativ zu einem Wert, der durch Abziehen der Gesamtsummen-Dampf-Verlust-Menge (Qts) von der gesamten unbekannten Dampf-Menge (Qx) erhalten wird, als ein unbekanntes Dampfverhältnis (Kx) bzw. ein verbessertes unbekanntes Dampfverhältnis (Kxx);
Berechnen eines Verhältnisses der gesamten unbekannten Dampf-Menge (Qx) relativ zu der gesamten Aufnahme-Dampf-Menge (Qi) und eines Verhältnisses einer gesamten unbekannten Basis-Dampf-Menge (Qxx) relativ zu der gesamten Aufnahme-Dampf-Menge (Qi) als ein unbekanntes Dampfverhältnis (Kx) bzw. ein scheinbares verbessertes unbekanntes Dampfverhältnis (Kxx'), wobei die gesamte unbekannte Basis-Dampf-Menge (Qxx) ein Wert ist, der durch Abziehen der Gesamtsummen-Dampf-Verlust-Menge (Qts) von der gesamten unbekannten Dampf-Menge (Qx) erhalten wird.

3. Verfahren zum Betreiben eines Systems zur Kondensatableitersystem-Diagnose gemäß Anspruch 1 oder 2, **dadurch gekennzeichnet, dass** das Verfahren ferner umfasst: den Schritt eines Generierens von Daten, der auf Basis der Berechnungsergebnisse des Berechnungsmittels (S2) von einem Datengenerierungsmittel (S3) durchgeführt wird, das in dem System zur Systemdiagnose enthalten ist, zum Generieren von Auswertungsdaten (D), die einen Inhalt haben, der mindestens die gesamte unbekannte Dampf-Menge (Qx) und das zu verbessernde unbekannte Dampfverhältnis (Kts) angibt, oder Auswertungsdaten (D), die einen Inhalt haben, der mindestens die gesamte Ableiter-Durchgangs-Dampf-Verlust-Menge (Qt), die Gesamtsummen-Dampf-Verlust-Menge (Qts) und das zu verbessernde unbekannte Dampfverhältnis angibt, oder Auswertungsdaten, die einen Inhalt haben, der mindestens das unbekannte Dampfverhältnis (Kx) und das verbesserte unbekannte Dampfverhältnis (Kxx) angibt, oder Auswertungsdaten, die einen Inhalt haben, der mindestens das unbekannte Dampfverhältnis (Kx) und das scheinbare verbesserte unbekannte Dampfverhältnis (Kxx') angibt.

4. System zur Kondensatableitersystem-Diagnose, umfassend:
eine Ableiter-Diagnoseeinrichtung (8),
eine Leckage-Diagnoseeinrichtung (12), und
ein Eingabemittel (S1), das einen Verbindungsteil (11a) zur Verbindung mit der Ableiter-Diagnoseeinrichtung (8) und der Leckage-Diagnoseeinrichtung (12) umfasst, wobei das Eingabemittel (S1) ferner eine Benutzerschnittstelle (11b) zum Liefern von Benutzereingaben umfasst, wobei das Eingabemittel (S1) dazu angepasst ist,
von der Ableiter-Diagnoseeinrichtung (8), wenn sie mit dem Verbindungsteil (11a) verbunden ist, Ergebnisse einer Abieiter-Betriebsdiagnose, die von der Ableiter-Diagnoseeinrichtung (8) durchgeführt wird, zum Diagnostizieren von Betriebsbedingungen mindestens eines Teils einer Mehrzahl von Auswertungs-Ziel-Kondensatableitern (2), die in einer Auswertungs-Ziel-Dampf-Rohrleitung (3) eingebaut sind, zu empfangen, und von der Leckage-Diagnoseeinrichtung (12), wenn sie mit dem Verbindungsteil (11a) verbunden ist, eine von der Leckage-Diagnoseeinrichtung (12) durchgeführte Dampf-Leckagediagnose zum Diagnostizieren einer Dampfleckage aus mindestens einem Teil von entsprechenden Rohrleitungsteilen der Auswertungs-Ziel-Dampf-Rohrleitung (3) zu empfangen, und
über die Benutzerschnittstelle (11b) Eingaben einer gesamten Aufnahme-Dampf-Menge (Qi) und einer gesamten Bedarfs-Dampf-Menge (Qo) oder eine Eingabe einer gesamten unbekannten Dampf-Menge (Qx), die eine Differenz zwischen der gesamten Aufnahme-Dampf-Menge (Qi) und der gesamten Bedarfs-Dampf-Menge (Qo) ist, der Auswertungs-Ziel-Dampf-Rohrleitung (3) zu empfangen, **dadurch gekennzeichnet, dass**
das Eingabemittel (S1) ferner dazu angepasst ist, getrennt von der Ableiter-Diagnoseeinrichtung (8) und der Leckage-Diagnoseeinrichtung (12), wenn sie mit dem Verbindungsteil (11a) verbunden sind,
Ableiter-Zahl-Verhältnis-Informationen (RT) zwischen den Auswertungs-Ziel-Kondensatableitern (2), die diagnostiziert werden, und allen Auswertungs-Ziel-Kondensatableitern (2) und
Auswertungs-Mengen-Verhältnis-Informationen (RV) zwischen den Rohrleitungsteilen, die diagnostiziert werden, und allen Auswertungs-Ziel-Dampf-Rohrleitungen (3) zu empfangen;
wobei das System ferner ein Berechnungsmittel (S2) zum Berechnen, auf Basis des Ergebnisses der Ableiter-Betriebs-Diagnose und der Ableiter-Zahl-Verhältnis-Informationen (RT), die in das Eingabemittel (S1) eingegeben wurden, einer gesamten Ableiter-Durchgangs-Dampf-Verlust-Menge (Qt), die durch Aufsummieren von Ableiter-Durchgangs-Dampf-Verlust-Mengen für alle Auswertungs-Ziel-Kondensatableiter (2) erhalten wurde, umfasst;
wobei das Berechnungsmittel (S2) auf Basis eines Ergebnisses der Dampf-Leckage-Diagnose und der Auswertungs-Mengen-Verhältnis-Informationen (RV), die in das Eingabemittel (S1) eingegeben wurden, eine gesamten Dampf-Leckage-Verlust-Menge (Qs), die durch Aufsummieren von Dampf-Leckage-Verlust-Mengen aus den entsprechenden Rohrleitungsteilen für die gesamte Auswertungs-Ziel-Dampf-Rohrleitung (3) erhalten wird, ebenfalls berechnet;
wobei auf Basis der gesamten Aufnahme-Dampf-Menge (Qi) und der gesamten Bedarfs-Dampf-Menge (Qo) oder der gesamten unbekannten Dampf-Menge (Qx)
das Berechnungsmittel (S2) ferner ein Verhältnis einer Gesamtsummen-Dampf-Verlust-Menge (Qts) relativ zu der gesamten unbekannten Dampf-Menge (Qx) berechnet, welche die Differenz zwischen der gesamten Aufnahme-Dampf-Menge (Qi) und der gesamten Bedarfs-Dampf-Menge (Qo) ist, als ein zu verbesserndes unbekanntes Dampfverhältnis (Kts) berechnet, wobei die Gesamtsummen-Dampf-Verlust-Menge (Qts) eine Summe der gesamten Ableiter-Durchgangs-Dampf-Verlust-Menge (Qt) und der gesamten Dampf-Leckage-Verlust-Menge (Qs) ist, oder;
das Berechnungsmittel (S2) ferner ein Verhältnis der gesamten unbekannten Dampf-Menge (Qx) relativ zu der gesamten Aufnahme-Dampf-Menge (Qi) und ein Verhältnis einer gesamten unbekannten Basis-Dampf-Menge (Qxx) relativ zu einem Wert, der durch Abziehen der Gesamtsummen-Dampf-Verlust-Menge (Qts) von der gesamten Aufnahme-Dampf-Menge (Qi) erhalten wird, als ein unbekanntes Dampfverhältnis (Kx) bzw. ein verbessertes unbekanntes Dampfverhältnis (Kxx) berechnet, wobei die gesamte unbekannte Basis-Dampf-Menge (Qxx) ein Wert ist, der durch Abziehen der Gesamtsummen-Dampf-Verlust-Menge (Qts) von dem gesamten unbekannten Dampf-Verlust erhalten wird, oder;
ein Verhältnis der gesamten unbekannten Dampf-Menge (Qx) relativ zu der gesamten Aufnahme-Dampf-Menge (Qi) und ein Verhältnis einer gesamten unbekannten Basis-Dampf-Menge (Qxx) relativ zur gesamten Aufnahme-Dampf-Menge (Qi) als ein unbekanntes Dampfverhältnis (Kx) bzw. ein scheinbares verbessertes unbekanntes Dampfverhältnis (Kxx') berechnet, wobei die gesamte unbekannte Basis-Dampf-Menge (Qxx) ein Wert ist, der durch Abziehen der Gesamtsummen-Dampf-Verlust-Menge (Qts) von der gesamten unbekannten Dampf-Menge (Qx) erhalten wird.

5. System gemäß Anspruch 4, **dadurch gekennzeichnet, dass** das System ferner ein Datengenerierungsmittel (S3) umfasst, um auf Basis der Berechnungsergebnisse des Berechnungsmittels (S2) Auswertungsdaten (D), die einen Inhalt haben, der mindestens die gesamte unbekannte Dampf-Menge (Qx) und das zu verbessernde unbekannte Dampfverhältnis (Kts) angibt, oder Auswertungsdaten, die einen Inhalt haben, der mindestens die gesamte Ableiter-Durchgangs-Dampf-Verlust-Menge (Qt), die Gesamtsummen-Dampf-Verlust-Menge (Qts) und das zu verbessernde unbekannte Dampfverhältnis (Kts) angibt, oder Auswertungsdaten (D), die einen Inhalt haben, der mindestens das unbekannte Dampfverhältnis (Kx) und das verbesserte unbekannte Dampfverhältnis (Kxx) angibt, oder Auswertungsdaten (D) zu generieren, die einen Inhalt haben, der mindestens das unbekannte Dampfverhältnis (Kx) und das scheinbare verbesserte unbekannte Dampfverhältnis (Kxx') angibt.

## Revendications

1. Procédé d'exploitation d'un système de diagnostic d'un système (1) de purgeurs de vapeur doté d'une pluralité de purgeurs (2) de vapeur, le système comprenant un moyen (S1) d'entrée comportant une partie (11a) de raccordement servant au raccordement avec un diagnostiqueur (8) de purgeurs, et un moyen (S2) de calcul, le procédé comprenant une étape d'entrée consistant à recevoir, en provenance du diagnostiqueur (8) de purgeurs, lorsqu'il est relié à la partie (11a) de raccordement, via le moyen (S1) d'entrée, des entrées de résultat d'un diagnostic de fonctionnement de purgeurs effectué par le diagnostiqueur (8) de purgeurs pour diagnostiquer des états opérationnels d'une pluralité de purgeurs (2) de vapeur soumis à évaluation montés dans une conduite (3) de vapeur soumise à évaluation et des entrées d'une quantité totale de vapeur de réception (Qi) et d'une quantité totale de vapeur nécessaire (Qo) de la conduite (3) de vapeur soumise à évaluation;
**caractérisé en ce que**
ladite étape d'entrée introduit ladite quantité totale de vapeur de réception (Qi) et ladite quantité totale de vapeur nécessaire (Qo) ou une entrée d'une quantité totale de vapeur inconnue (Qx) qui est une différence entre la quantité totale de vapeur de réception (Qi) et la quantité totale de vapeur nécessaire (Qo);
ledit procédé comporte les étapes consistant à:
faire calculer, par ledit moyen (S2) de calcul et d'après le résultat du diagnostic de fonctionnement de purgeurs introduit dans le moyen (S1) d'entrée, une quantité totale de pertes de vapeur ayant transité par les purgeurs (Qt) obtenue en agrégeant des quantités de pertes de vapeur ayant transité par les purgeurs pour tous les purgeurs de vapeur soumis à évaluation; et
1) d'après la quantité totale de vapeur de réception (Qi) et la quantité totale de vapeur nécessaire (Qo):
calculer la quantité totale de vapeur inconnue (Qx) et calculer un rapport de la quantité totale de vapeur inconnue (Qx) à la quantité totale de vapeur de réception (Qi) et un rapport d'une quantité totale de vapeur inconnue de base (Qxx) à une valeur obtenue en soustrayant la quantité totale de pertes de vapeur ayant transité par les purgeurs (Qt) de la quantité totale de vapeur de réception (Qi) en tant que rapport de vapeur inconnu (Kx) et que rapport de vapeur inconnu amélioré (Kxx), respectivement, ladite quantité totale de vapeur inconnue de base (Qxx) étant une valeur obtenue en soustrayant la quantité totale de pertes de vapeur ayant transité par les purgeurs (Qt) de la quantité totale de pertes de vapeur inconnue (Qx); ou
calculer la quantité totale de vapeur inconnue (Qx) et calculer un rapport de la quantité totale de vapeur inconnue (Qx) à la quantité totale de vapeur de réception (Qi) et un rapport d'une quantité totale de vapeur inconnue de base (Qxx) à la quantité totale de vapeur de réception (Qi) en tant que rapport de vapeur inconnu (Kx) et que rapport de vapeur inconnu amélioré apparent (Kxx'), respectivement, ladite quantité totale de vapeur inconnue de base (Qxx) étant une valeur obtenue en soustrayant la quantité totale de pertes de vapeur ayant transité par les purgeurs (Qt) de la quantité totale de pertes de vapeur inconnue (Qx);
2) soit d'après la quantité totale de vapeur de réception (Qi) et la quantité totale de vapeur nécessaire (Qo), soit d'après la quantité totale de vapeur inconnue (Qx) introduite dans le moyen (S1) d'entrée, calculer un rapport de la quantité totale de pertes de vapeur ayant transité par les purgeurs (Qt) à la quantité totale de vapeur inconnue (Qx) qui est la différence entre la quantité totale de vapeur de réception (Qi) et la quantité totale de vapeur nécessaire (Qo), en tant que rapport de vapeur inconnu améliorable (Kts).

2. Procédé d'exploitation d'un système de diagnostic d'un système (1) de purgeurs de vapeur doté d'une pluralité de purgeurs (2) de vapeur, le système comprenant un moyen (S1) d'entrée comportant une partie (11a) de raccordement servant au raccordement avec un diagnostiqueur (8) de purgeurs et avec un diagnostiqueur (12) de fuites et un moyen (S2) de calcul, le procédé comprenant une étape d'entrée consistant à recevoir, en provenance du diagnostiqueur (8) de purgeurs, lorsqu'il est relié à la partie (11a) de raccordement, via le moyen (S1) d'entrée, des entrées de résultat d'un diagnostic de fonctionnement de purgeurs effectué par le diagnostiqueur (8) de purgeurs pour diagnostiquer des états opérationnels d'une pluralité de purgeurs (2) de vapeur soumis à évaluation montés dans une conduite (3) de vapeur soumise à évaluation et, en provenance du diagnostiqueur (12) de fuites, lorsqu'il est relié à la partie (11a) de raccordement, un diagnostic de fuites de vapeur effectué par le diagnostiqueur (12) de fuites pour diagnostiquer des fuites de vapeur provenant de parties de conduite respectives de la conduite de vapeur soumise à évaluation et des entrées d'une quantité totale de vapeur de réception (Qi) et d'une quantité totale de vapeur nécessaire (Qo) de la conduite (3) de vapeur soumise à évaluation;
**caractérisé en ce que**
ladite étape d'entrée introduit ladite quantité totale de vapeur de réception (Qi) et ladite quantité totale de vapeur nécessaire (Qo) ou une entrée d'une quantité totale de vapeur inconnue (Qx) qui est une différence entre la quantité totale de vapeur de réception (Qi) et la quantité totale de vapeur nécessaire (Qo);
ledit procédé comporte les étapes consistant à:
faire calculer, par ledit moyen (S2) de calcul et d'après le résultat du diagnostic de fonctionnement de purgeurs introduit dans le moyen (S1) d'entrée, une quantité totale de pertes de vapeur ayant transité par les purgeurs (Qt) obtenue en agrégeant des quantités de pertes de vapeur ayant transité par les purgeurs pour tous les purgeurs de vapeur soumis à évaluation;
faire calculer, par ledit moyen (S2) de calcul et d'après un résultat du diagnostic de fuites de vapeur introduit dans le moyen (S1) d'entrée, une quantité totale de pertes par fuites de vapeur (Qs) obtenue en agrégeant des quantités de pertes par fuites de vapeur provenant des parties de conduite respectives;
d'après la quantité totale de vapeur de réception (Qi) et la quantité totale de vapeur nécessaire (Qo) ou la quantité totale de vapeur inconnue (Qx) introduite dans le moyen (S1) d'entrée,
calculer un rapport d'une quantité totale sommée de pertes de vapeur (Qts) à la quantité totale de vapeur inconnue (Qx) qui est la différence entre la quantité totale de vapeur de réception (Qi) et la quantité totale de vapeur nécessaire (Qo) en tant que rapport de vapeur inconnu améliorable (Kts), ladite quantité totale sommée de pertes de vapeur (Qts) étant une somme de la quantité totale de pertes de vapeur ayant transité par les purgeurs (Qt) et de la quantité totale de pertes par fuites de vapeur (Qs), ou
calculer un rapport de la quantité totale de vapeur inconnue (Qx) à la quantité totale de vapeur de réception (Qi) et un rapport d'une quantité totale de vapeur inconnue de base (Qxx) à une valeur obtenue en soustrayant la quantité totale sommée de pertes de vapeur (Qts) de la quantité totale de vapeur inconnue (Qx), en tant que rapport de vapeur inconnu (Kx) et que rapport de vapeur inconnu amélioré (Kxx), respectivement;
calculer un rapport de la quantité totale de vapeur inconnue (Qx) à la quantité totale de vapeur de réception (Qi) et un rapport d'une quantité totale de vapeur inconnue de base (Qxx) à la quantité totale de vapeur de réception (Qi) en tant que rapport de vapeur inconnu (Kx) et que rapport de vapeur inconnu amélioré apparent (Kxx'), respectivement, ladite quantité totale de vapeur inconnue de base (Qxx) étant une valeur obtenue en soustrayant la quantité totale sommée de pertes de vapeur (Qts) de la quantité totale de vapeur inconnue (Qx).

3. Procédé d'exploitation d'un système de diagnostic d'un système de purgeurs de vapeur selon la revendication 1 ou 2, **caractérisé en ce que** le procédé comporte en outre l'étape de génération de données effectuée, d'après les résultats de calcul du moyen (S2) de calcul, par un moyen (S3) de génération de données compris dans le système de diagnostic de système pour générer des données d'évaluation (D) dont le contenu est indicatif d'au moins la quantité totale de vapeur inconnue (Qx) et le rapport de vapeur inconnu améliorable (Kts) ou des données d'évaluation (D) dont le contenu est indicatif d'au moins la quantité totale de pertes de vapeur ayant transité par les purgeurs (Qt), la quantité totale sommée de pertes de vapeur (Qts) et le rapport de vapeur inconnu améliorable ou des données d'évaluation dont le contenu est indicatif d'au moins le rapport de vapeur inconnu (Kx) et le rapport de vapeur inconnu amélioré (Kxx) ou des données d'évaluation dont le contenu est indicatif d'au moins le rapport de vapeur inconnu (Kx) et le rapport de vapeur inconnu amélioré apparent (Kxx').

4. Système de diagnostic de système de purgeurs de vapeur, comportant:
un diagnostiqueur (8) de purgeurs,
un diagnostiqueur (12) de fuites, et
un moyen (S1) d'entrée comportant une partie (11a) de raccordement servant au raccordement avec le diagnostiqueur (8) de purgeurs et le diagnostiqueur (12) de fuites, ledit moyen (S1) d'entrée comportant en outre une interface (11b) d'utilisateur servant à assurer une entrée d'utilisateur, ledit moyen (S1) d'entrée étant conçu pour
recevoir en provenance du diagnostiqueur (8) de purgeurs, lorsqu'il est relié à la partie (11a) de raccordement, des résultats d'un diagnostic de fonctionnement de purgeurs effectué par le diagnostiqueur (8) de purgeurs pour diagnostiquer des états opérationnels d'au moins une partie d'une pluralité de purgeurs (2) de vapeur soumis à évaluation montés dans une conduite (3) de vapeur soumise à évaluation, et recevoir en provenance du diagnostiqueur (12) de fuites, lorsqu'il est relié à la partie (11a) de raccordement, un diagnostic de fuites de vapeur effectué par le diagnostiqueur (12) de fuites pour diagnostiquer des fuites de vapeur provenant d'au moins une partie de parties de conduite respectives de la conduite (3) de vapeur soumise à évaluation et
recevoir, via l'interface (11b) d'utilisateur, des entrées d'une quantité totale de vapeur de réception (Qi) et d'une quantité totale de vapeur nécessaire (Qo) ou une entrée d'une quantité totale de vapeur inconnue (Qx) qui est une différence entre la quantité totale de vapeur de réception (Qi) et la quantité totale de vapeur nécessaire (Qo), de la conduite (3) de vapeur soumise à évaluation,
**caractérisé en ce que**
ledit moyen (S1) d'entrée est en outre conçu pour recevoir, séparément dudit diagnostiqueur (8) de purgeurs et dudit diagnostiqueur (12) de fuites, lorsqu'il est relié à la partie (11a) de raccordement,
des informations de rapport de nombre de purgeurs (RT) entre les purgeurs (2) de vapeur soumis à évaluation diagnostiqués et tous les purgeurs (2) de vapeur soumis à évaluation, et
des informations de rapport de quantités d'évaluation (RV) entre les parties de conduites diagnostiquées et toutes les conduites (3) de vapeur soumises à évaluation;
le système comportant en outre un moyen (S2) de calcul servant à calculer, d'après le résultat du diagnostic de fonctionnement de purgeurs et les informations de rapport de nombre de purgeurs (RT) introduites dans le moyen (S1) d'entrée, une quantité totale de pertes de vapeur ayant transité par les purgeurs (Qt) obtenue en agrégeant des quantités de pertes de vapeur ayant transité par les purgeurs pour tous les purgeurs (2) de vapeur soumis à évaluation;
ledit moyen (S2) de calcul calculant également, d'après un résultat du diagnostic de fuites de vapeur et les informations de rapport de quantités d'évaluation (RV) introduites dans le moyen (S1) d'entrée, une quantité totale de pertes par fuites de vapeur (Qs) obtenue en agrégeant des quantités de pertes par fuites de vapeur provenant des parties de conduite respectives pour la totalité de la conduite (3) de vapeur soumise à évaluation;
d'après la quantité totale de vapeur de réception (Qi) et la quantité totale de vapeur nécessaire (Qo) ou la quantité totale de vapeur inconnue (Qx) introduite dans le moyen (S1) d'entrée,
ledit moyen (S2) de calcul calculant en outre un rapport d'une quantité totale sommée de pertes de vapeur (Qts) à la quantité totale de vapeur inconnue (Qx) qui est la différence entre la quantité totale de vapeur de réception (Qi) et la quantité totale de vapeur nécessaire (Qo) en tant que rapport de vapeur inconnu améliorable (Kts), ladite quantité totale sommée de pertes de vapeur (Qts) étant une somme de la quantité totale de pertes de vapeur ayant transité par les purgeurs (Qt) et de la quantité totale de pertes par fuites de vapeur (Qs), ou;
ledit moyen (S2) de calcul calculant en outre un rapport de la quantité totale de vapeur inconnue (Qx) à la quantité totale de vapeur de réception (Qi) et un rapport d'une quantité totale de vapeur inconnue de base (Qxx) à une valeur obtenue en soustrayant la quantité totale sommée de pertes de vapeur (Qts) de la quantité totale de vapeur de réception (Qi) en tant que rapport de vapeur inconnu (Kx) et que rapport de vapeur inconnu amélioré (Kxx), respectivement, ladite quantité totale de vapeur inconnue de base (Qxx) étant une valeur obtenue en soustrayant la quantité totale sommée de pertes de vapeur (Qts) des pertes de vapeur totales inconnues, ou
calculant un rapport de la quantité totale de vapeur inconnue (Qx) à la quantité totale de vapeur de réception (Qi) et un rapport d'une quantité totale de vapeur inconnue de base (Qxx) à la quantité totale de vapeur de réception (Qi) en tant que rapport de vapeur inconnu (Kx) et que rapport de vapeur inconnu amélioré apparent (Kxx'), respectivement, ladite quantité totale de vapeur inconnue de base (Qxx) étant une valeur obtenue en soustrayant la quantité totale sommée de pertes de vapeur (Qts) de la quantité totale de vapeur inconnue (Qx).

5. Système selon la revendication 4, **caractérisé en ce que** le système comporte en outre un moyen (S3) de génération de données servant à générer, d'après les résultats de calcul du moyen (S2) de calcul, des données d'évaluation (D) dont le contenu est indicatif d'au moins la quantité totale de vapeur inconnue (Qx) et le rapport de vapeur inconnu améliorable (Kts) ou des données d'évaluation dont le contenu est indicatif d'au moins la quantité totale de pertes de vapeur ayant transité par les purgeurs (Qt), la quantité totale sommée de pertes de vapeur (Qts) et le rapport de vapeur inconnu améliorable (Kts) ou des données d'évaluation (D) dont le contenu est indicatif d'au moins le rapport de vapeur inconnu (Kx) et le rapport de vapeur inconnu amélioré (Kxx) ou des données d'évaluation (D) dont le contenu est indicatif d'au moins le rapport de vapeur inconnu (Kx) et le rapport de vapeur inconnu amélioré apparent (Kxx').
